(19) **Europäisches Patentamt / European Patent Office / Office européen des brevets**

(11) **EP 4 570 706 A1**

(12) **EUROPEAN PATENT APPLICATION**
published in accordance with Art. 153(4) EPC

(43) Date of publication:
**18.06.2025 Bulletin 2025/25**

(21) Application number: **23851823.7**

(22) Date of filing: **08.08.2023**

(51) International Patent Classification (IPC):
**B65G 1/04** (2006.01)     **B65G 1/137** (2006.01)
**G06Q 10/08** (2024.01)

(52) Cooperative Patent Classification (CPC):
**B65G 1/04; B65G 1/137; G06Q 10/08**

(86) International application number:
**PCT/CN2023/111716**

(87) International publication number:
**WO 2024/032602 (15.02.2024 Gazette 2024/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **10.08.2022 CN 202222101841 U**
**03.02.2023 CN 202310121443**

(71) Applicant: **Beijing Geekplus Technology Co. Ltd Beijing 100102 (CN)**

(72) Inventors:
• **LIU, Kai**
  **Beijing 100102 (CN)**
• **WANG, Mengdi**
  **Beijing 100102 (CN)**
• **ZANG, Dong**
  **Beijing 100102 (CN)**
• **AN, Yuxin**
  **Beijing 100102 (CN)**

(74) Representative: **Manna, Sara et al**
**Società Italiana Brevetti S.p.A.**
**Piazza di Pietra, 39**
**00186 Roma (IT)**

(54) **WAREHOUSING SYSTEM, WAREHOUSING SYSTEM SCHEDULING METHOD AND APPARATUS, AND ELECTRONIC DEVICE**

(57)     The present disclosure relates to a warehousing system, a warehousing system scheduling method and apparatus, and an electronic device. The warehousing system comprises: a station area; at least one of a mixing station, a first station and a second station, which are arranged in the station area and are configured to receive an order, wherein the order matches first-type goods and second-type goods; a storage area, which is configured to store a first-type carrier and a second-type carrier, wherein the first-type carrier is configured to bear the first-type goods, and the second-type carrier is configured to bear the second-type goods; a first-type carrying device, which is configured to carry the first-type carrier, which bears the first-type goods, to the mixing station or the second station on the basis of a carrying instruction; a second-type carrying device, which is configured to take a material box out of the second-type carrier and carry same to the mixing station or the first station on the basis of a carrying instruction; and a control apparatus, which is connected to the first-type carrying device and the second-type carrying device, and respectively sends the carrying instructions to the first-type carrying device and the second-type carrying device.

FIG. 2

**Description**

The present application is based on and claims priority to Chinese Application No. 202222101841.4, filed with the China National Intellectual Property Administration on August 10, 2022, and Chinese Application No. 202310121443.5, filed with the China National Intellectual Property Administration on February 03, 2023, the entire content of which is incorporated herein by reference.

**TECHNICAL FIELD**

The present disclosure relates to a technology field of scheduling of a warehousing system, and specifically to a warehousing system, a scheduling method for a warehousing system, a scheduling device for a warehousing system, and an electronic device.

**BACKGROUND**

Currently, picking in logistics or warehousing systems adopts a single-format picking mode.
In other words, if a picking robot is used to transport a kind of shelf or a material box to an operator, the operator can only perform single-format picking at a workstation. For example, a split picked item can only be adapted to a mode of split picking, and a case picked item can only be adapted to a mode of case picking.

**SUMMARY**

Embodiments of the present disclosure provide a warehousing system, a scheduling method for a warehousing system, a scheduling device for a warehousing system, and an electronic device.
According to some embodiments of the present disclosure, a warehousing system is provided, including: a workstation area; at least one of at least one mixed workstation, at least one first workstation or at least one second workstation, provided in the workstation area and configured to receive an order, in which the order hits at least first type of goods and second type of goods, the first type of goods is different from the second type of goods; a storage area, configured to store at least one first-type carrier and at least one second-type carrier, in which the first-type carrier is configured to carry the first type of goods, and the second-type carrier is configured to carry the second type of goods; at least one first-type transporter, configured to transport the first-type carrier carrying the first type of goods to the mixed workstation or the second workstation based on a transporting instruction; at least one second-type transporter, configured to take out a material box from the second-type carrier and transport the material box to the mixed workstation or the first workstation based on the transporting instruction, in which the material box stores the second type of goods hit by the order; and a controller, connected to the first-type transporter and the second-type transporter, and configured to send the transporting instruction to the first-type transporter and the second-type transporter respectively.
According to some embodiments of the present disclosure, a scheduling method for a warehousing system is provided, including: obtaining an order, in which the order hits at least first type of goods and second type of goods, the first type is different from the second type; calling a first-type transporter and a second-type transporter simultaneously or sequentially based on the order, and controlling the first-type transporter and the second-type transporter to transport a first-type carrier storing the first type of goods hit by the order and a material box storing the second type of goods hit by the order to a workstation area for picking and processing; in which the workstation area includes at least one of at least one mixed workstation, at least one first workstation or at least one second workstation, the first-type transporter is configured to transport the first-type carrier carrying the first type of goods to the mixed workstation or the second workstation, and the second-type transporter is configured to transport the material box storing the second type of goods hit by the order to the mixed workstation or the first workstation.
According to some embodiments of the present disclosure, a warehousing system is provided, including: a storage area, a transporter, a workstation and a controller; in which the transporter includes a first robot, a second robot and a third robot, the first robot, the second robot and the third robot have different transporting modes; the storage area includes a first area and a second area, the workstation is provided on one side of the first area and/or the second area; the workstation includes a work platform corresponding to at least one of the second robot and the third robot; the first area includes a plurality of first shelves, a first operating area for the first robot to operate is provided between each two first shelves, and a second operating area for the second robot to operate is provided at bottom of the first shelf; the second area includes a plurality of second shelves, a third operating area for the third robot to operate is provided at bottom of the second shelf; the first shelf and the second shelf have different structures, the first shelf and the second shelf respectively store different types of goods; the third robot is a first-type transporter, and the first robot and the second robot are second-type transporters; the controller is configured to obtain an outbound scheduling task of target goods, determine a target shelf corresponding to the target goods based on the outbound scheduling task, generate an outbound transporting task, and send the outbound transporting task to a target robot to cause the target robot to execute the outbound scheduling task; in which the target robot is at least one of the first robot, the second robot, or the third robot; the target shelf is at least one of the first shelf or the second shelf; the outbound transporting task includes position information of the target goods; the first robot is configured to operate in the first operating area after receiving the outbound transporting task, obtain a material box of the target goods on the first shelf, and transport the material box of the target goods to a first target goods cache position on the first shelf; in which the first target goods cache position is located at the lowest layer of the first shelf; the second robot is configured to operate in the second operating area after receiving the outbound transporting task, and transport the material box of the target goods placed on the first target goods cache position to the workstation; the third robot is configured to operate in the third operating area after receiving the outbound transporting task, and transport the second shelf corresponding to the target goods to the workstation; the workstation is configured to pick the target goods in the material box or the target goods in the second shelf transported by the target robot.

According to some embodiments of the present disclosure, a scheduling method for a warehousing system is provided, including: obtaining, by a controller, an outbound scheduling task of target goods; determining a target shelf corresponding to the target goods based on the outbound scheduling task of the target goods; in which the target shelf includes a first shelf located in a first area or a second shelf located in a second area; the first shelf and the second shelf have different structures; determining a target robot for executing the outbound scheduling task based on the target shelf, sending an outbound transporting instruction to the target robot to cause the target robot to execute the outbound scheduling task within a target operating area; in which the target operating area is at least one of a first operating area, a second operating area, or a third operating area; the first operating area is an area between each two first shelves, the second operating area is an area at bottom of the first shelf, and the third operating area is an area at bottom of the second shelf; the target robot is at least one of the first robot, the second robot, or the third robot.

According some embodiments of the present disclosure, a scheduling device for a warehousing system is provided, including: an obtaining module, configured to obtain an order, in which the order hits first type of goods and second type of goods; a controlling module, configured to call a first-type transporter and a second-type transporter simultaneously or sequentially based on the order, and control the first-type transporter and the second-type transporter to transport a first-type carrier storing the first type of goods hit by the order and a material box storing the second type of goods hit by the order to a workstation area for picking and processing.

According some embodiments of the present disclosure, an electronic device including a memory and a processor is provided. The memory stores a computer program. When the processor executes the computer program, steps of the method described above are implemented.

According to some embodiments of the present disclosure, a computer-readable storage medium having a computer program stored thereon is provided. When the computer program is executed by the processor, steps of the method described above are implemented.

**BRIEF DESCRIPTION OF THE DRAWINGS**

The accompanying drawings, which are incorporated in and constitute a part of this specification, illustrate embodiments of the disclosure, and serve to explain the principle of the disclosure together with the description.

FIG. 1 is a schematic diagram of a warehousing system in the related art.
FIG. 2 is a block diagram of a warehousing system according to some embodiments of the present disclosure.
FIG. 3 is a block diagram of a first transporter according to some embodiments of the present disclosure.
FIG. 4 is a block diagram of a third transporter according to some embodiments of the present disclosure.
FIG. 5 is another block diagram of a warehousing system according to some embodiments of the present disclosure.
FIG. 6 is a block diagram of a first shelf according to some embodiments of the present disclosure.
FIG. 7 is a block diagram of a second shelf according to some embodiments of the present disclosure.
FIG. 8 is a schematic diagram of a first layout of a warehousing system according to some embodiments of the present disclosure.
FIG. 9 is a front view of a second material box transporter taking out a material box from a third carrier according to some embodiments of the present disclosure.
FIG. 10 is a top view of a second material box transporter taking out a material box from a third carrier according to some embodiments of the present disclosure.
FIG. 11 is a block diagram of a second material box transporter according to some embodiments of the present disclosure.
FIG. 12 is a block diagram of a carrying part according to some embodiments of the present disclosure.
FIG. 13 is a block diagram of a carrying part according to some embodiments of the present disclosure.
FIG. 14 is a top view of a material box on a carrying part illustrated in FIG. 12.
FIG. 15 is a block diagram of another second shelf according to some embodiments of the present disclosure.

FIG. 16 is a schematic diagram of a shelf arrangement in a second area according to some embodiments of the present disclosure.

FIG. 17 is a schematic diagram of a second layout of a warehousing system according to some embodiments of the present disclosure.

FIG. 18 is a schematic diagram of a third layout of a warehousing system according to some embodiments of the present disclosure.

FIG. 19 is a block diagram of a mixed workstation according to some embodiments of the present disclosure.

FIG. 20 is a first flowchart of a scheduling method for a warehousing system according to some embodiments of the present disclosure.

FIG. 21 is a second flowchart of a scheduling method for a warehousing system according to some embodiments of the present disclosure.

FIG. 22 is a flowchart of a step S2 illustrated in FIG. 21.

FIG. 23 is a third flowchart of a scheduling method for a warehousing system according to some embodiments of the present disclosure.

FIG. 24 is a fourth flowchart of a scheduling method for a warehousing system according to some embodiments of the present disclosure.

FIG. 25 is a fifth flowchart of a scheduling method for a warehousing system according to some embodiments of the present disclosure.

FIG. 26 is a block diagram of a scheduling device for a warehousing system according to some embodiments of the present disclosure.

FIG. 27 is a block diagram of an electrical device for a warehousing system according to some embodiments of the present disclosure.

FIG. 28 is a block diagram of another electrical device for a warehousing system according to some embodiments of the present disclosure.

## DETAILED DESCRIPTION

Various example embodiments of the present disclosure will be described in detail with reference to the accompanying drawings. The relative arrangement of components and steps, numerical expressions, and numerical values set forth in these examples do not limit the scope of the disclosure unless otherwise specifically stated.

The following description of at least one embodiment is merely illustrative in nature and is in no way intended to limit the disclosure, its application or usage.

Techniques, methods and devices known to those of ordinary skill in the relevant art may not be discussed in detail, but where appropriate, the techniques, methods and devices should be considered as part of the specification.

In all examples shown and discussed herein, any specific values are to be construed as illustrative only and not as limitation. Accordingly, other examples of the embodiments may have different values.

Similar reference numerals and letters refer to similar items in the following figures, so that once an item is defined in one figure, it does not need to further discuss the item in subsequent figures.

With the continuous development of the field of robots, a picking mode has gradually switched from a "human to goods" mode to an existing "goods to human" mode. "Shelf to humans" refers to that a robot transports a shelf to a workstation to complete a picking task, while "cargo body to humans" refer to that the robot transports a cargo body to the workstation to complete the picking task.

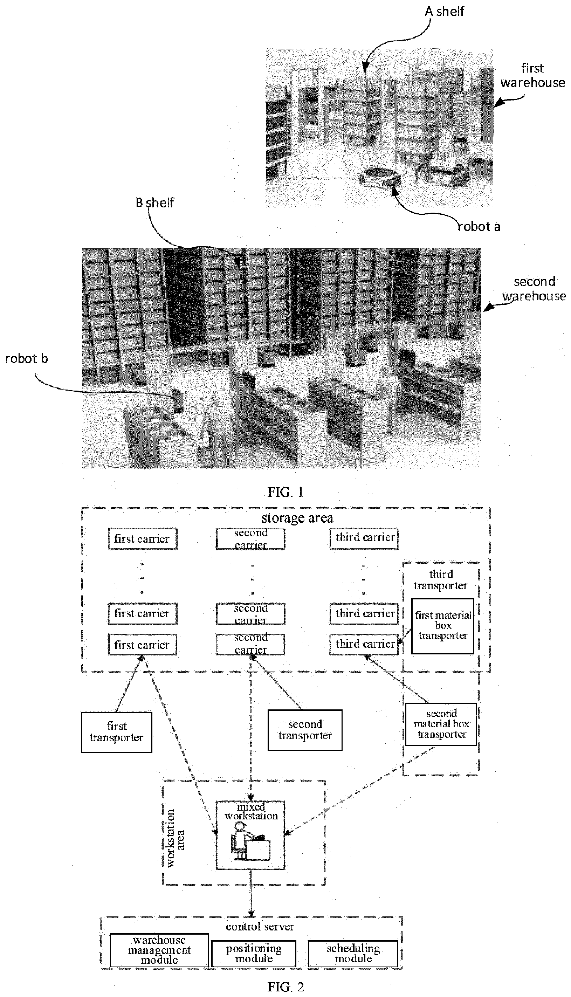

In the related art, picking in logistics or warehousing systems adopts a single-format picking mode. That is, robots that transport shelves or cargo bodies to workstations in a same warehouse are usually of the same type. As shown in FIG. 1, a first warehouse is full of shelves A, and robot a can take out goods on a shelf A and transport them to a workstation. A second warehouse is full of shelves B, and robot b can transport a shelf B to a workstation. In practice, a type of goods stored on the shelf A is different from a type of goods stored on the shelf B. For example, the goods stored on the shelf A may be bulk goods, while the goods stored on the shelf B may be case goods. Operators can only perform the single-format picking at the workstations. For example, a split picked item can only be adapted to a mode of split picking, and a case picked item can only be adapted to a mode of case picking, which may result in a low picking efficiency and a high cost. In addition, the joint scheduling between robots is relatively poor.

Accordingly, the embodiments of the present disclosure provide a warehousing system, a scheduling method for a warehousing system, a scheduling device for a warehousing system, and an electronic device, to solve the above problems in the related art.

As illustrated in FIG. 2, the warehousing system of the embodiments of the present disclosure includes a workstation area, a storage area (also called warehouse storage area) and a controller.

The workstation area includes a plurality of workstations, in which at least one workstation is a mixed workstation, at least one workstation is a first workstation, and at least one workstation is a second workstation. Each workstation is configured to receive an order and pick goods hit by the order. The goods at least includes first type of goods and second type of goods. The first type of goods may include, but not limited to, bulk goods or case goods. The second type of goods may include, but not limited to, material-box-stored goods.

The mixed workstation is configured to receive an order and pick goods hit by the order. The order hits first type of goods and second type of goods. For example, the order hits at least two types of goods of the bulk goods, the case goods, or the material-box-stored goods. A work platform in the mixed workstation may be used to pick the at least two types of goods. The work platform in the mixed workstation may be referred to as a mixed picking work platform (e.g., first mixed picking work platform).

The first workstation is configured to receive an order and pick goods hit by the order. The order hits one of the first type of goods and the second type of goods. For example, the order hits the second type of goods, for example, the order hits the material-box-stored goods. A first work platform in the first workstation may be used to pick one type of goods. The first workstation is a single-format workstation.

The second workstation is configured to receive an order and pick goods hit by the order. The order hits the other one of the first type of goods and the second type of goods. For example, the order hits the first type of goods, for example, the order hits the bulk goods or the case goods. A second work platform in the second workstation may be used to pick two types of goods, including the bulk goods or the case goods. The second work platform may be referred to as a mixed picking work platform (e.g., second mixed picking work platform). The second workstation is a multi-format workstation.

The storage area is configured to store at least one first-type carrier and at least one second-type carrier. The first-type carrier is configured to carry the first type of goods, and the second-type carrier is configured to carry the second type of goods. At least one first-type transporter is configured to transport the first-type carrier carrying the first type of goods to the mixed workstation or the second workstation based on a transporting instruction. At least one second-type transporter is configured to take out a material box from the second-type carrier and transport the material box to the mixed workstation or the first workstation based on the transporting instruction. The material box stores the second type of goods hit by the order.

The controller is connected to the first-type transporter and the second-type transporter, and sends the transporting instruction to the first-type transporter and the second-type transporter respectively. The controller can be a control server or an electronic device (such as a terminal device), which is not limited in the embodiments of the present disclosure, as long as it can receive a scheduling task corresponding to the order and send the transporting instruction to the corresponding transporter, so that the corresponding transporter can perform the scheduling task. The following description takes the controller being the control server as an example.

In some embodiments, the first-type carrier may include at least one first carrier and at least one second carrier, and the second-type carrier may include at least one third carrier. The first carrier is configured to store bulk goods, the second carrier is configured to store case goods, and the third carrier is configured to store material-box-stored goods.

Therefore, in a case where the goods hit in the workstation area include three types of goods: the bulk goods, the case goods and the material-box-stored goods, the storage area is configured to store at least one first carrier, at least one second carrier and at least one third carrier.

Correspondingly, the first-type transporter may include at least one first transporter and at least one second transporter, and the second-type transporter may include at least one third transporter.

At least one first transporter is configured to transport the first carrier from the storage area to the mixed workstation or the second workstation based on a first transporting instruction, in which the first carrier stores the bulk goods hit by the order. At least one second transporter is configured to transport the second carrier from the storage area to the mixed workstation or the second workstation based on the second transporting instruction, in which the second carrier stores the case goods hit by the order.

At least one third transporter is configured to take out the material box from the third carrier and transport the material box to the mixed workstation or the first workstation based on the third transporting instruction, in which the material box stores the goods hit by the order. The goods may be the material-box-stored goods.

For example, the control server is connected to the first transporter, the second transporter, and the third transporter, and sends the transporting instruction to the first transporter, the second transporter, and the third transporter respectively. The transporting instruction can also be called a transporting task.

In the warehousing system of the embodiment of the present disclosure, the order received by the workstation area can hit at least two types of goods. The carriers storing these goods are all located in a same storage area. Based on the received order, the control server can call the first-type transporter and the second-type transporter, for example, to transport the first-type carrier and the material box on the second-type carrier storing the hit goods from the storage area to the workstation in the workstation area for picking processing. For example, the control server may, based on the received order, call the first transporter, the second transporter, and the third transporter at the same time to transport at least two of the first carrier, the second carrier, or the material box on the third carrier from the storage area to the workstation area for picking and processing.

The warehousing system transports at least two types of goods to the workstation area, such as transporting to a mixed workstation in the workstation area, through the coordinated scheduling of different types transporters, for picking of at least two formats. Compared with a traditional single-format warehousing system, the picking format of the warehousing system has been expanded. In addition, each transporter can operate simultaneously and can be jointly scheduled, which improves the outbound efficiency and picking efficiency.

In order to facilitate better understanding, a specific structure and working principle of the warehousing system of the present disclosure will be described in detail with reference to FIGS. 2 to 27 in conjunction with specific embodiments.

With reference to FIG. 2, the warehousing system of the embodiment of the present disclosure includes a workstation area and a storage area.

In some embodiments, the workstation area and storage area are different areas for undertaking different tasks that are obtained by artificially dividing the warehouse. The warehouse can be an indoor space composed of a building or an open open-air outdoor space, mainly depending on the type of stored goods, which is no longer limited herein.

In addition, area sizes of the workstation area and the storage area can be the same or different, and are set by a user based on an area of the warehouse and actual storage needs, which are not limited herein.

A plurality of workstations are provided in the workstation area, in which at least one workstation is a first workstation, at least one workstation is a second workstation, and at least one workstation is a mixed workstation. The first workstation and the second workstation respectively receive and pick one type of goods. For example, the first workstation receives and picks an order, and the order hits second type of goods (such as material-box-stored goods). The second workstation receives and picks the goods hit by the order, and the goods hit by the order may be first type of goods (such as bulk goods or case goods). The mixed workstation is configured to receive an order, and the order hits at least the first type of goods and the second type of goods. For example, the order hits at least two types of goods of the bulk goods, the case goods, or the material-box-stored goods. That is, the mixed workstation is configured to pick and process the at least two types of goods.

Taking a retail industry such as shopping malls or supermarkets as an example, the bulk goods can be daily necessities such as nail polish, shampoo, toothpaste, etc. The case goods can be toilet paper, copy paper and other goods. The case goods can be food or free gifts with the purchase of designated goods. For example, if you buy a box of toilet paper, you can get a roll of toilet paper or a bottle of mineral water as a gift. Of course, this disclosure only illustrates some examples of the bulk goods, the case goods, and the material-box-stored goods, but is not limited to the above goods. In practice, those skilled in the art set different types of goods based on actual usage scenarios of the warehousing system.

A mixed workstation includes at least a work platform and bags or boxes configured to package goods for use by staffs or picking robots to pick the order.

The mixed workstation can be equipped with a display device with a display function and a control panel. The display device is configured to display the order that currently needs to be processed. The staff or picking robot sends an order instruction through the control panel integrated into the display device or a control panel disposed independently of display device.

There are a first-type carrier and a second-type carrier stored in the storage area. The first-type carrier is configured to store the first type of goods, and the second-type carrier is configured to store the second type of goods. For example, the first-type carrier includes at least one first carrier and at least one second carrier. The second-type carrier includes at least one third carrier. The first carrier is configured to store the bulk goods, the second carrier is configured to store the case goods, and the third carrier is configured to store the material-box-stored goods.

The first carrier can be a conventional shelf, that is, it consists of a leg member and two sheets vertically spaced on the leg member. In order to facilitate picking, the sheet can be divided into different areas through partitions, and different areas have different kinds of goods.

The second carrier can also be a conventional shelf with the same structure as the first carrier, or can also be a pallet. The case goods can be stacked on the pallet to achieve the purpose of intensive storage.

The third carrier may also be a conventional shelf with the same structure as the first carrier, or may be partitions fixed to a wall of the warehouse at vertical intervals, etc.

Continuing to refer to FIG. 2, the warehousing system of the present disclosure also includes a first-type transporter and a second-type transporter. The first-type transporter is configured to transport the first-type carrier carrying the first type of goods to the mixed workstation or the second workstation based on the transporting instruction. At least one second-type transporter is configured to take out a material box from the second-type carrier and transport the material box to the mixed workstation or the first workstation based on the handling instruction. The material box stores the second type of goods hit by the order.

In some embodiments, the first-type transporter includes at least one first transporter, and the first transporter is configured to transport the first carrier storing the order-hit bulk goods from the storage area to the mixed workstation or the second workstation based on a first transporting instruction.

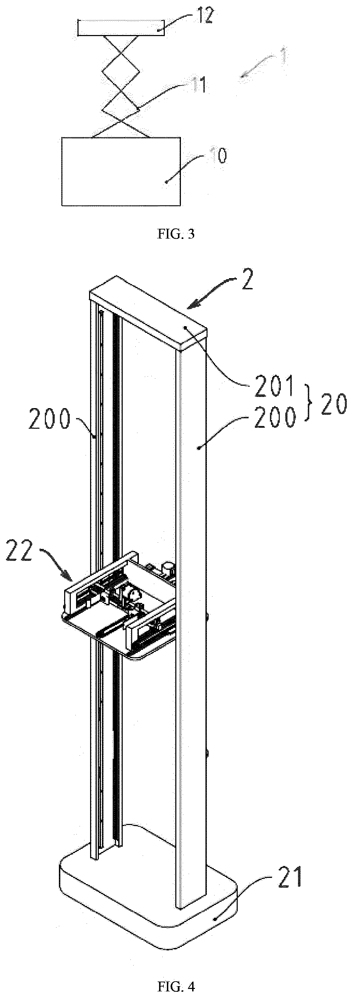

In detail, referring to FIG. 3, in some embodiments, a first transporter 1 includes a first traveling mechanism 10 and a lifting mechanism 11. The lifting mechanism 11 is fixedly installed on the first traveling mechanism 10, and a bearing part 12 is provided on its top. The lifting mechanism in FIG. 3 is only used as an example, and other mechanisms that can perform lifting functions fall within the scope of the present disclosure.

The first transporter 1 is configured to drive the lifting mechanism 11 to bring the bearing part 12 to ascend to lift a first carrier, then drive the first traveling mechanism 10 to travel to a workstation area, and then drive the lifting mechanism 11 to bring the bearing part 12 to descend to place the first carrier in the workstation area, and the first transporter 1 can be on standby in the workstation area or leave the workstation area to reach a designated position.

After the picking is completed, the first transporter 1 is further configured to transport the picked first carrier back to the storage area.

In one embodiment, the first transporter 1 includes a robot AGV. For example, the first transporter 1 may be a third robot (to be distinguished from the first robot and the second robot mentioned below).

The lifting mechanism 11 can be a piston rod of a pneumatic cylinder or a hydraulic cylinder. The cylinder is fixed on a second traveling mechanism 30, and the bearing part 12 is fixed on a free end of the piston rod. As the hydraulic oil or gas enters and exits the respective cylinders, the piston rod brings the bearing part 12 to ascend and descend to lift the material box.

The lifting mechanism 11 can also be a telescopic linkage mechanism carried by a hinged combination of several rods. Of course, the lifting frame can also include a bracket, a motor and a power transmission mechanism. The function of the power transmission mechanism is to convert the rotation of the motor into a linear movement, such as a rack and pinion transmission mechanism, a belt transmission mechanism, a chain transmission mechanism, etc.

In detail, when the lifting frame adopts the rack and pinion transmission mechanism, the rack extends in a vertical direction and is fixedly connected to the bracket, and the pinion meshing with the rack is arranged on the bearing part 12 in a rotatable manner.

After the motor is started, the motor drives the pinion to bring the bearing part 12 to ascend and descend along an extension direction of the rack.

When the lifting frame adopts the belt transmission mechanism, its two transmission wheels are vertically spaced and arranged on the bracket in a rotatable manner. Its transmission belt is tensioned on the two transmission wheels, and the bearing part 12 is fixed on the transmission belt.

After the motor is started, it drives one of the transmission wheels to rotate, and then the transmission belt brings the bearing part 12 to ascend and descend. When the lifting frame adopts the chain transmission mechanism, its two sprockets are vertically spaced and arranged on the bracket in a rotatable manner, its chain is tensioned on the two sprockets, and the bearing part 12 is fixed on the chain.

After the motor is started, it drives one of the sprockets to rotate, and then the chain brings the bearing part 12 to ascend and descend.

Continuing to refer to FIG. 2, the first-type transporter according to the embodiments of the present disclosure further includes at least one second transporter. The second transporter is configured to transport the second carrier from the storage area to the mixed workstation or a second workstation based on a second transporting instruction. The second carrier stores case goods hit by the order.

The specific structure and working principle of the second transporter are basically the same as those of the first transporter. For example, the second transporter can also be a third robot. The difference lies in that the two carriers transported by them have different types of goods stored thereon. In order to keep the conciseness, details are not repeated herein.

The second-type transporter in the embodiments of the present disclosure may include at least one third transporter, and the third transporter is configured to take out the material box from the third carrier and transport the material box to the mixed workstation or the first workstation based on a third transporting instruction. The material box stores the goods hit by the order.

In some embodiments, the third transporter may be a single equipment that combines a self-moving functionality with a functionality of picking and placing material boxes. That is, the equipment alone can take out the material box storing the goods hit by the order on the third carrier, and can also transport the taken-out material box from the storage area to the mixed workstation. Of course, based on its dual functionality, the material box transporting system alone can also transport the picked material box from the mixed workstation to the storage area and place the material box at a free temporary storage position on the third carrier. For example, at least one second-type transporter includes the first robot, that is, the third transporter includes the first robot, and the first robot is configured to take out the material box from the second-type carrier and transport the material box to the mixed workstation or the first workstation based on the transporting instruction.

In some embodiments, referring to FIG. 4, the third transporter 2, that is, the first robot, includes a mast 20, a second traveling mechanism 21 and a material box pick-and-place mechanism 22.

The mast 20 is fixed on the second traveling mechanism 21, the second traveling mechanism 21 is configured to bring the mast 20 to travel on the ground, and the material box pick-and-place mechanism 22 is arranged on the mast 20.

In detail, the mast 20 includes two columns 200 arranged in parallel to each other and a cross beam 201 connecting the two columns 200.

Of course, the second traveling mechanism 21 can also be any other trolley that can bring the mast 20 and the material box pick-and-place mechanism 22 to move from a current position to a target position based on the transporting instruction.

The material box pick-and-place mechanism 22 includes a base part, a U-shaped telescopic frame and two clamping claws. The base part is provided on the two columns of the mast in a liftable manner through a first lifting mechanism, the U-shaped telescopic frame is telescopically provided on the base part through a first-level telescopic mechanism, and the two clamping claws are telescopically provided on the U-shaped telescopic frame through a second-level telescopic mechanism, and the two clamping claws are controlled by a grabbing driving mechanism to move closer to or away from each other to grab or release the material box.

The first lifting driving mechanism drives the base part to ascend and descend relative to the mast to bring the U-shaped telescopic frame thereon to ascend and descend relative to the mast to a vertical coordinate position where the target material box is located.

Based on this structure, the working principle of the third transporter 2 is described as follows.

When receiving the third transporting instruction, firstly, the second traveling mechanism 21 of the third transporter 2 travels from the current position to a horizontal coordinate position of the target material box on the third carrier, and the first lifting mechanism brings the material box pick-and-place mechanism 22 on the lower level to the vertical coordinate position of the target material box.

Secondly, the first-level telescopic mechanism of the material box pick-and-place mechanism 22 drives the U-shaped telescopic frame to extend over a first distance relative to the base part towards the direction closer to the third carrier, and then the second-level telescopic mechanism drives the two clamping claws to extend over a second distance relative to the U-shaped telescopic frame towards the direction closer to the third carrier, so that the two clamping claws are located on both sides of the target material box, and then the grabbing driving mechanism drives the two clamping claws to move towards the direction closer to each other until the material box above the target material box is clamped tightly, and finally the first-level telescopic mechanism and the second-level telescopic mechanism drive the U-shaped telescopic frame and the two clamping claws simultaneously or sequentially to retract in the direction away from the third carrier until the material box is placed on the base part, or remain in the current state.

The second traveling mechanism 21 brings the third transporter 2 from the storage area to the workstation area. The material box pick-and-place mechanism 22 reverses the above-mentioned process of taking out the material box from the third carrier to place the material box on the mixed workstation for picking and processing.

After the picking is completed, the third transporter 2 can also transport the material box back to the third carrier.

The material box pick-and-place mechanism of the above-mentioned material box transporter can be any one of a suction cup type, a telescopic arm, and a grabbing type material box pick-and-place mechanism.

In other embodiments, the third transporter may be a combination of two transporters. For example, the third transporter includes a first material box transporter and a second material box transporter.

As a first implementation, referring to FIG. 2, the first material box transporter is configured to take out the material box storing the goods hit by the order from the third carrier and place the material box on the second material box transporter. The second material box transporter is configured to transport the received material box from the storage area to the workstation area. The first material box transporter may be the first robot, and the second material box transporter may be the second robot.

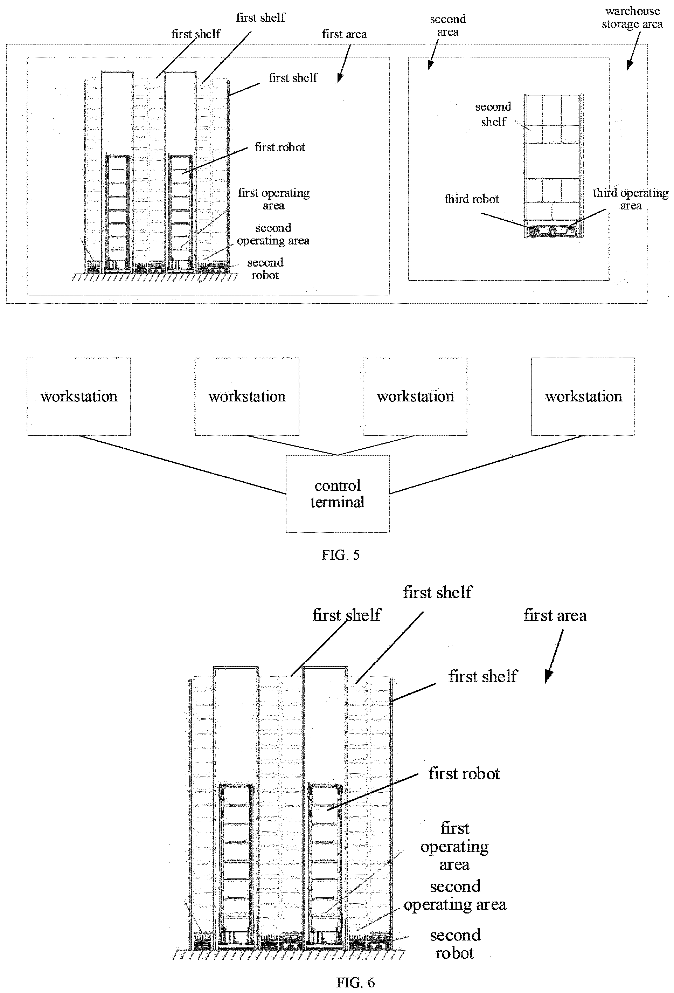

As a second implementation, referring to FIGS. 5 and 6, the second-type carrier includes a storage position and a temporary storage position below the storage position, and the first material box transporter, such as the first robot, is configured to transport the material box at the storage position to the temporary storage position based on the transporting instruction. The second material box transporter, such as the second robot, is configured to transport the material box at the temporary storage position to the mixed workstation or the first workstation.

The first implementation of the second-type transporter, such as the third transporter, will be described below.

The first material box transporter, such as the first robot, may be the third transporter shown in FIG. 4. In this embodiment, the third transporter shown in FIG. 4 operates in the storage area, and needs to transport the material box on the third carrier to the second material box transporter without leaving the storage area. The material box transporter shown in FIG. 4 is a mobile mast type material box transporter, and the mast structure can be driven by the first travelling mechanism to travel between various areas.

In another embodiment, the first material box transporter can also be a fixed mast structure, with the mast relatively fixed on one side of the third carrier. Under the action of the driving mechanism, a material box pick-and-place mechanism movably provided on the mast can move in a horizontal direction and a vertical direction relative to the mast to pick and place the material boxes at different height positions of the third carrier.

The structure of the second material box transporter, such as the second robot, is basically the same as the structure of the first transporter in FIG. 3. It at least includes a traveling mechanism and a bearing part arranged on the traveling mechanism. After the bearing part receives the material box pushed by the first material box transporter, the traveling mechanism brings the second material box transporter to travel from the storage area to the workstation area.

Of course, the second material box transporter may also include a lifting mechanism as shown in FIG. 3 to adjust a height of the bearing part relative to the traveling mechanism based on actual needs. The third transporter may be a combination of the first material box transporter and the second material box transporter having two different structures mentioned above. Those skilled in the art can select the best combination based on actual scenarios.

The second implementation of the second-type transporter, such as the third transporter, will be described below.

In combination with FIGS. 5 and 6, in another embodiment, the third carrier may be a conventional shelf. For convenience of description, the shelf corresponding to the third carrier is named the first shelf. The first shelf may include a bracket and a plurality of sheets supported by the bracket that are arranged at intervals along a vertical direction. Each sheet has at least one storage position, and each storage position is configured to store a container such as a material box. In addition, the third carrier, such as the sheet on the lowest layer of the first shelf, forms the temporary storage position.

The third transporter of the second-type transporter may include the first material box transporter and the second material box transporter. The first material box transporter is configured to take out the material box from the storage position of the first shelf and place the material box at the temporary storage position of the first shelf. The second material box transporter is configured to operate at the bottom of the first shelf to take out the material box at the temporary storage position and transport the material box from the storage area to the workstation area.

Referring to FIGS. 5 and 6, in some embodiments, the second-type transporter includes the first robot and the second robot. For example, the first material box transporter may be the first robot, and the second material box transporter may be the second robot. The first-type transporter, such as the first transporter and the second transporter, may all be third robots.

The first robot, the second robot, and the third robot have different transporting modes. The storage area includes a first area and a second area. A plurality of workstations are provided on one side of the first area and/or the second area. The workstation includes a work platform corresponding to at least one of the second robot or the third robot.

In some embodiments, the first-type carrier, such as the first carrier and the second carrier, may both be shelves. In order to distinguish the first-type carrier from the second-type carrier, such as the third carrier, each of the first carrier and the second carrier may be named the second shelf.

The first area may include a plurality of second-type carriers such as first shelves. A first operating area for the first robot to operate is provided between each two first shelves, and a second operating area for the second robot to operate is provided at the bottom of the first shelf. The second area includes a plurality of first-type carriers, such as at least one first carrier and at least one second carrier, that is to say, the second area includes a plurality of second shelves. Among the plurality of second shelves, at least one second shelf is configured to store bulk goods, and at least another second shelf is configured to store case goods. The bottom of the second shelf is a third operating area for the third robot to travel. The first shelf and the second shelf have different structures.

The control server is configured to obtain an outbound scheduling task of the target goods hit by the order, determine the target carrier (or called target shelf) corresponding to the target goods based on the outbound scheduling task, generate an outbound transporting task, and send the outbound transporting task to the target robot, so that the target robot can perform the outbound scheduling task. The target robot is at least one of the first robot, the second robot, or the third robot. The target carrier is at least one of the first carrier, the second carrier, or the third carrier. That is, the target shelf is at least one of the first shelf or the second shelf. The target robot can drive within the corresponding driving area. The outbound transporting task includes position information of the target goods.

In addition, the target goods includes first-type goods or second-type goods. For example, the target goods may be one of the bulk goods, the case goods, or the material-box-stored goods. In this example, the same order can hit two target goods at the same time. One target goods is one of the bulk goods, the case goods, or the material-box-stored goods. The other target goods is the other one of the bulk goods, the case goods, or the material-box-stored goods.

For example, if the two target goods hit in an order at the same time are bulk goods and case goods, the order needs to schedule two target robots at the same time. For example, one target robot can be one third robot configured to transport the second shelf storing the bulk goods. The other target robot may be another third robot configured to transport the second shelf storing the case goods.

For another example, if the two target goods hit in an order at the same time are bulk goods and material-box-stored goods, the order needs to schedule three target robots at the same time. For example, one of the three target robots can be one first robot, one of the three target robots can be one second robot, and one of the three target robots can be one third robot. The first robot and the second robot are jointly configured to schedule the material box storing the goods, to transport the material box to the mixed workstation. The third robot may be configured to schedule the second shelf storing the bulk goods, to transport the second shelf storing the bulk goods to the mixed workstation.

If the target robot is the first robot, the first robot is configured to operate in the first operating area after receiving the outbound transporting task, obtain the material box of the target goods on the first shelf, and transport the material box of the target goods to the first target goods cache position on the first shelf. The first target goods cache position is located at the lowest layer of the first shelf, that is, at the temporary storage position of the first shelf. The first shelf can be as shown in FIG. 6. The first robot can be as shown in FIG. 6. The first robot can take out the material box (cargo body) from the grid opening of the shelf through a box picking device (for example, a robotic arm). Optionally, the grid openings for storing the cargo body (goods) in the first shelf have the same specification.

If the target robot is the second robot, the second robot is configured to operate in the second operating area after receiving the outbound transporting task, transport the material box of the target goods placed on the first target goods cache position to the workstation, such as the mixed workstation. The second robot can be as shown in FIG. 6. The second robot can lift the material box of the target goods from a goods cache position for transportation. The second robot can transport the goods at the goods cache position to the corresponding workstation, such as the mixed workstation.

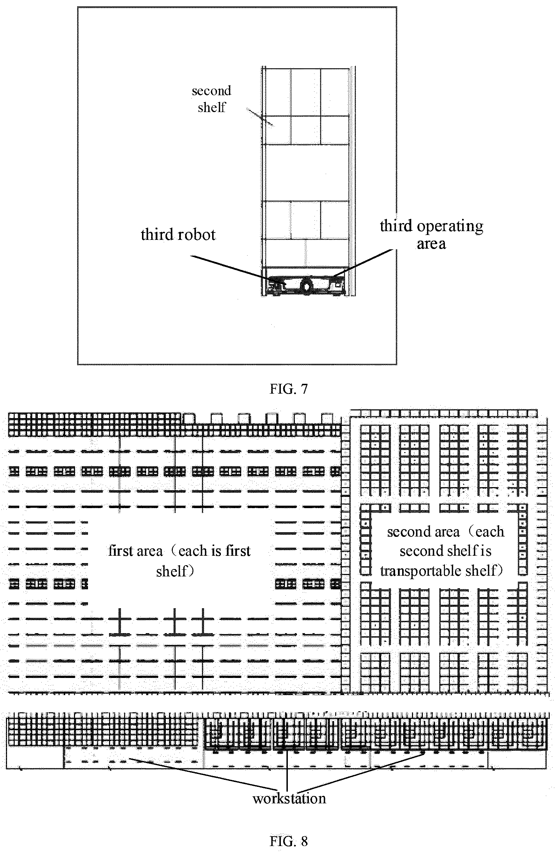

If the target robot is the third robot, the third robot is configured to operate in the third operating area after receiving the outbound transporting task, transport the first carrier or the second carrier (i.e., the second shelf) corresponding to the target goods to the workstation, such as the corresponding mixed workstation. The third robot is configured to transport the second shelf as shown in FIG. 7 to the corresponding mixed workstation. The third robot can lift the shelf where the material box of the target goods is located for transportation.

The mixed workstation is used to pick at least two of the target goods in the material box transported by the target robot, the target goods in the second shelf storing the bulk goods, or the target goods in the second shelf storing the case goods.

In some embodiments, a storage density of the second-type carrier, such as the first shelf, is greater than a storage density of the first-type carrier, such as the second shelf. The first shelf is used to store the second type of goods, and the second shelf is used to store the first type of goods. For example, a goods specification of the second type of goods is less than or equal to a goods specification of the first type of goods, and/or an outbound quantity of the first type of goods is greater than an outbound quantity of the second type of goods. The storage density is determined by the number of grid openings in the shelf. If the number of grid openings is large, the storage density is high. If the number of grid openings is small, the storage density is low.

For example, the first shelf may store a small and medium-sized commodity that needs not to be outbound temporarily or has a low outbound frequency. The second shelf can store a medium and large-sized commodity that is about to be outbound or has a high outbound frequency.

In the embodiments of the present disclosure, different storage area layouts can be selected according to business scenarios and customer needs, which may be more flexible and easier to use in an actual picking operation. Compared with the pure "shelf to humans" solution, the storage density is increased. Compared with the pure "cargo body to humans" solution, the cost is reduced and the efficiency is improved. In addition, the storage area layout proposed in the embodiment of the present disclosure can maximize the usage of vertical storage space. In addition, the warehousing system can realize simultaneous operation and joint scheduling of various robots, make full use of the storage space, set up combined shelves to better combine operation scheduling between robots, so as to improve the outbound efficiency.

In some embodiments, the workstation area includes multiple workstations, and the workstation may include a mixed picking work platform, a first work platform and a second work platform. The first work platform is a work platform for picking target goods transported by the second robot. The mixed picking work platform is a work platform for picking target goods transported by the second robot or target goods transported by the third robot. The second work platform is a work platform for picking target goods in the second shelf transported by the third robot.

Since the second shelf transported by the third robot can store either bulk goods or case goods, the second work platform corresponding to the third robot can also be understood as a mixed picking work platform. For the sake of distinction, the above-mentioned work platform for picking the target goods transported by the second robot or the target goods transported by the third robot can be called the first mixed picking work platform, and the second work platform can be called the second mixed picking work platform.

A workstation whose work platform is a mixed picking work platform is called a mixed workstation, and multiple mixed workstations may include a first mixed picking work platform and a second mixed picking work platform. For example, at least one mixed workstation includes a first mixed picking work platform, and at least another mixed workstation includes a second mixed picking work platform.

In some embodiments, the second robot is configured to operate in the second operating area after receiving the outbound transporting task, to transport the material box of the target goods to the first mixed picking work platform or the first work platform.

The third robot is configured to operate in the third operating area after receiving the outbound transporting task to transport the second shelf corresponding to the target goods to the first mixed picking work platform or the second work platform (i.e. the second mixed picking work platform). For example, when the target goods hit by the order is bulk goods, the third robot is specifically the first transporter, that is, the third robot will transport the second shelf storing the bulk goods to the first mixed picking work platform or the second mixed picking work platform after receiving the first transporting instruction.

The outbound transporting task includes a target work platform. For the second robot, during a process of setting the target work platform, the target work platform can be selected from the first mixed picking work platform or the first work platform.

In some embodiments, by setting the mixed picking work platform, the first work platform and the second work platform, the corresponding workstations can be set by making full use of the advantage of multiple robots to improve the scheduling efficiency.

In other embodiments, the work platforms in the workstations can be set as the mixed picking work platforms. That is, all workstations are mixed workstations.

In some embodiments, the second robot is configured to operate in the second operating area after receiving the outbound transporting task, to transport the material box of the target goods to the mixed picking work platform.

The third robot is configured to operate in the third operating area after receiving the outbound transporting task, to transport the second shelf corresponding to the target goods to the mixed picking work platform.

In this embodiment, all workstations are set as mixed picking work platforms, so that there are more workstations to choose during a process of robots leaving the warehouse, so as to realize simultaneous operation and joint scheduling of various robots and improve the outbound efficiency.

In some embodiments, the second shelf includes a transportable shelf, as shown in FIG. 7, the third robot is configured to operate in the third operating area after receiving the outbound transporting task, to transport the transportable shelf corresponding to the target goods to the mixed workstation. When the second shelf is a transportable shelf, the layout of the warehousing system can be as shown in FIG. 8. The first area is located on the left side of the second area. The layout here is just an example. The first area can also be located on the right side of the second area, or the first area can be located inside the second area, which is not limited here.

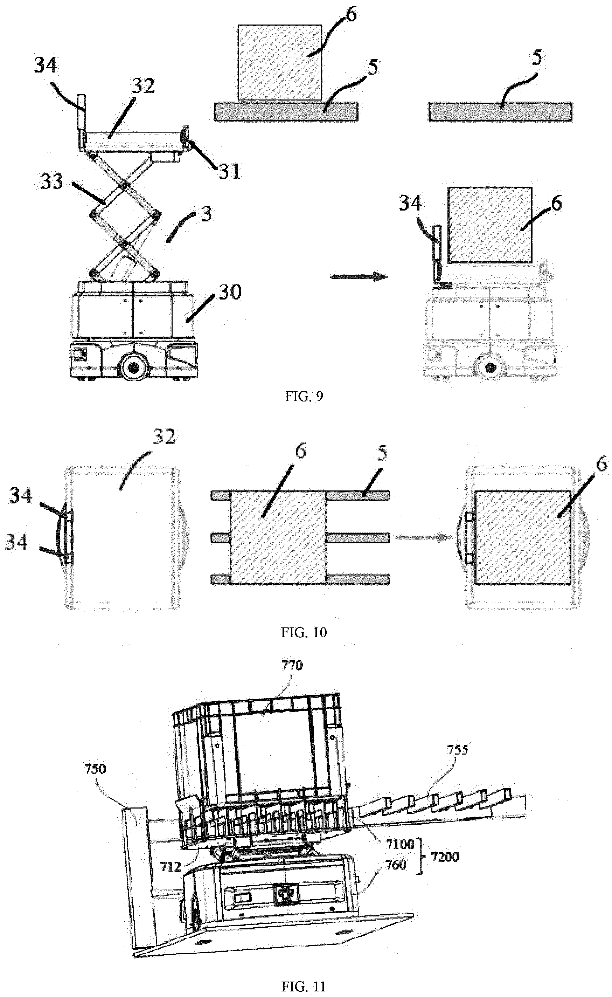

Referring to FIGS. 9 and 10, a second-type carrier such as the third carrier, such as the first shelf, is also provided with a comb structure on the lowest layer. The comb structure has at least one temporary storage position, which includes multiple teeth 5 spaced at intervals.

The second robot is configured to drive to be underneath the temporary storage position and lift to pass through comb gaps of the temporary storage position to lift the material box at the temporary storage position and transport the material box from the storage area (such as the first area) to workstation area.

The specific structure and working principle of the first material box transporter (i.e., the first robot) in the second-type transporter are the same as those of the third transporter shown in FIG. 3 in the previous embodiments. The difference lies in that the first material box transporter transports the material box on the storage position of the third carrier (i.e., the first shelf) to the temporary storage position for temporary storage, instead of directly placing the material box on the second material box transporter (i.e., the second robot). Those skilled in the art can completely implement the present embodiment based on the foregoing description, which will not be described in detail here.

Continuing to refer to FIGS. 9 and 10, in the embodiment, a traveling mechanism 30 and a base 31 of the second material box transporter 3 in the second-type transporter are connected through a lifting mechanism 33. The lifting mechanism 33 can bring the base 31 and a conveying mechanism 32 on the base 31 ascend or descend from the current position to a box picking position or a box sending position relative to the traveling mechanism 30.

In the embodiments of the present disclosure, the lifting mechanism 33 includes a scissor-fork mechanism and a driving mechanism that drives the scissor-fork mechanism to expand or retract. The driving mechanism is a hydraulic cylinder or a pneumatic cylinder. The cylinder of the pneumatic cylinder or the hydraulic cylinder is fixed on the traveling mechanism 30, and an end of the piston rod is set on the scissor-fork mechanism. As the piston rod expands and retracts relative to the cylinder, it pushes the scissor-fork mechanism to expand or retract, and then brings the base 31 and the conveying mechanism 32 on the base 31 to ascend or descend from the current position relative to the traveling mechanism 30. The scissor-fork mechanism is a commonly used lifting mechanism in the art. Those skilled in the art can completely implement the present embodiment based on the related art, which will not be described in detail here.

Of course, the lifting mechanism is not limited to the structure in the above embodiments. The lifting mechanism may also include a bracket, a motor and a power transmission mechanism. The function of the power transmission mechanism is to convert the rotation of the motor into a linear movement, such as a rack and pinion transmission mechanism, a belt transmission mechanism, a chain transmission mechanism, etc. After the first material box transporter transports the material box 6 to the comb structure, the second material box transporter 3 travels from the current position to the temporary storage position of the third carrier based on the third transporting instruction, and takes out the material box 6 from the temporary storage position of the third carrier.

In detail, two vertically extending push rods 34 are provided on the base 31 of the second material box transporter 3.

The function of the push rod 34 is that when the second material box transporter 3 passes under the temporary storage position of the third carrier, its push rod 34 passes through the gap between two teeth 5 of the comb structure, so as to push the material box 6 placed on the comb structure to the conveying mechanism 32 of the second material box transporter 3, and then the second material box transporter 3 carrying the material box travels from the storage area to the mixed workstation in the workstation area.

Two push rods 34 are provided in the embodiment to form two force application points for the material box 6 during a process that the second material box transporter 3 takes out the material box, so as to push the material box 6 from the temporary storage position of the third carrier in a relatively smooth manner.

Of course, one push rod 34 or multiple push rods 34 can be provided on the base of the second material box transporter 3. Those skilled in the art can set the number of push rods 34 based on factors such as a size of the base and a weight of the goods.

The specific structure and working principle of the second material box transporter will be described in detail below with reference to FIGS. 11 to 14 in combination with another embodiment.

The second material box transporter is configured to drive to be underneath the temporary storage position of the third carrier 750, such as the first shelf, and lift to pass through the comb gaps of the temporary storage position to lift the material box at the temporary storage position and transport the material box from the temporary storage position to the mixed workstation.

In detail, referring to FIG. 11 , the second-type carrier such as the third carrier 750 has a plurality of shelf teeth 755 spaced at intervals, and the plurality of shelf teeth 755 form the comb structure. The shelf teeth 755 are configured to place goods, that is, forming the temporary storage position.

The second material box transporter 7200 (i.e., the second robot) includes a robot body 760 and a carrying part 7100. The carrying part 7100 is provided on the top of the robot body 760, with a second side 712 of a bottom part 710 of the carrying part 7100 facing the robot body 760. The robot body 760 is connected to the carrying part 7100 on the second side 712 of the bottom part 710.

The carrying part 7100 includes the bottom part 710, a support layer 720, a first blocking member 730 and a second blocking member 740.

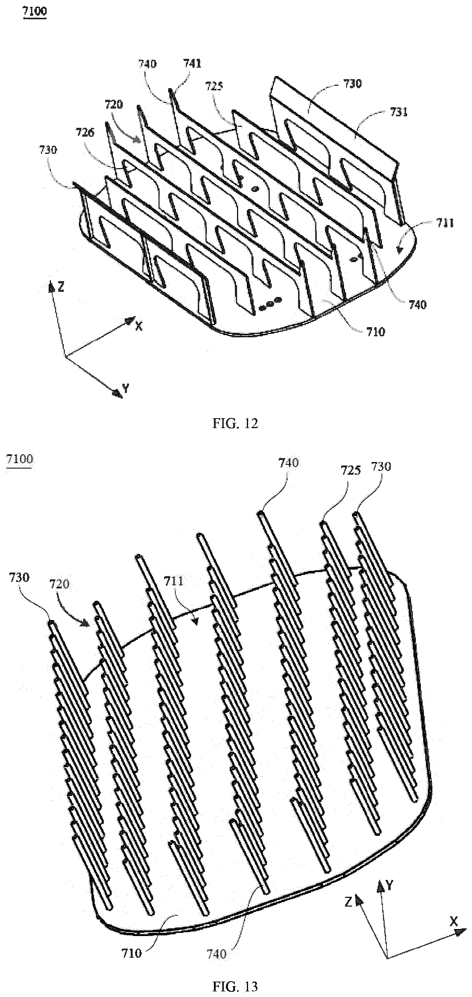

In some embodiments, the bottom part 710 is a generally rectangular part. The bottom part 710 has a first side 711 facing the carried item and a second side opposite the first side 711 (see FIG. 12). The support layer 720 is configured to carry items, that is, directly contacting the carried items (e.g., material boxes). The support layer 720 is composed of a plurality of protruding members 725. The plurality of protruding members 725 are provided on the first side 711 of the bottom part 710 and protrude from the first side 711 of the bottom part 710 in a height direction Z. The plurality of protruding members 725 are arranged at intervals along a first direction X, so that the comb teeth of the warehousing system or the warehouse device (such as the shelf, the transmission belt etc.) may enter the support layer 720 (as will be seen hereinafter). When an item is placed on the support layer 720, the item is located on the first side of the bottom part 710 and is supported by the protruding member 725 (see FIG. 12). The height direction Z is a direction perpendicular to the bottom part 710. In practice, the height direction Z is an upward direction.

The carrying part 7100 includes a plurality of first blocking members 730. The plurality of first blocking members 730 are provided on the protruding members 725 and respectively provided at both ends of the support layer 720 along the first direction X. The plurality of first blocking members 730 extend beyond the protruding members 725 along the height direction Z on the first side 711 of the bottom part 710. That is, the protruding member 725 is higher above the bottom part 710, and the first blocking member 730 is higher above the protruding member 720. In other words, the support layer 720 is higher above the bottom part 710, and the first blocking member 730 is higher above the support layer 720. The plurality of first blocking members 730 are arranged at intervals along the first direction X. The first direction X is perpendicular to the height direction Z. The first direction X is, for example, a width direction of the bottom part 710.

The carrying part 7100 includes a plurality of second blocking members 740. The plurality of second blocking members 740 are provided on the protruding members 725 and respectively provided at both ends of the support layer 720 along the second direction Y. The plurality of second blocking members 740 extend beyond the protruding members 725 along the height direction Z on the first side 711 of the bottom part 710. That is, the protruding member 725 is higher above the bottom part 710, and the second blocking member 740 is higher above the protruding member 725. In other words, the support layer 720 is higher above the bottom part 710, and the second blocking member 740 is higher above the support layer 720. The plurality of second blocking members 740 are arranged at intervals along the second direction Y. The second direction Y is different from the first direction X. The second direction Y is perpendicular to the height direction Z. The second direction Y is, for example, a length direction of the bottom part 710. Of course, the first direction X may be the length direction of the bottom part 710, and the second direction Y is the width direction of the bottom part 710.

When the item is supported by the support layer 720, the first blocking member 730 can block the item in the first direction X, and the second blocking member 740 can block the item in the second direction Y. In other words, the first blocking member 730 and the second blocking member 740 define a carrying area on the support layer 720 that can block the item on all sides. In this carrying area, the first blocking member 730 and the second blocking member 740 constrain the item at the extreme position, so that the posture of the item can be controlled to a certain extent.

In order to enable the carrying part 7100 to be adapted for items of various sizes, as shown in FIG. 12, all the first blocking members 730 and/or all the second blocking members 740 are disposed along an edge of the supporting layer 720 to make full use of the bearing area of the support layer 720. In other words, the plurality of first blocking members 730 are respectively located in two rows, and the two rows are spaced apart along the first direction X. A maximum span (or maximum size) of the support layer 720 along the first direction X does not exceed the span (or distance) of the two rows along the first direction X. The plurality of second blocking members 740 are respectively located in two columns, and the two columns are spaced apart along the second direction Y. A maximum span (or maximum size) of the support layer 720 along the second direction Y does not exceed the span (or distance) of the two columns along the second direction Y.

In order to increase the bearing area of the support layer 720 as much as possible, as shown in FIG. 12, the support layer 720 extends to the edge of the bottom part 710. The distance between the protruding members 725 also needs to be adapted to the size of the carried items. The smaller the distance between the protruding members 725, the wider the range of sizes of items to which they are adapted to.

In the present disclosure, the first blocking member 730 and the second blocking member 740 are connected to the protruding member 725 by, for example, welding, bonding, or the like. The first blocking member 730 and the protruding member 725 are integrally formed, and/or the second blocking member 740 and the protruding member 725 are integrally formed.

In the implementation shown in FIG. 12, the protruding member 725 is configured in a strip shape extending along a length direction. A plurality of strip-shape protruding members 725 are arranged at intervals along a width direction X, so that the support layer 720 has a comb-tooth shape. In order to reduce a weight of the carrying part 7100, the protruding member 725 is provided with a weight-reducing hole 726.

The carrying part 7100 has an axially symmetrical structure.

The plurality of protruding members 725 are arranged at equal intervals along the first direction X. The plurality of protruding members 725 may also be arranged at unequal intervals along the first direction X.

When the second material box transporter 7200 performs transportation, the material box 770 is placed on the carrying part 7100 (in some embodiments, the support layer 720). When the material box 770 needs to be placed on the third carrier 750, the second material box transporter 7200 moves to the open side of the shelf teeth 755, and aligns the protruding members 725 with the gaps between the shelf teeth. Then, the second material box transporter 7200 moves toward the third carrier 750, so as to enable the protruding members 725 of the support layer 720 to interlace with the space between the shelf teeth 755 (the protruding members 725 extend into the gaps between the shelf teeth 755) to transport the material box 770 to be above the shelf teeth 55. Then, the height of the second material box transporter 7200 is lowered, to place the material box 770 on the shelf teeth 755. When the second material box transporter 7200 takes out the material box 770, the second material box transporter 7200 first travels to be underneath the shelf teeth 755, to enable the protruding members 25 to align with the gaps between the shelf teeth 755. The height of the second material box transporter 7200 is raised, and the protruding members 25 lifts the material box 770 by interlacing with the space between the shelf teeth 755, so that the material box 770 is placed on the carrying part 7100 (in some embodiments, on the support layer 720). Subsequently, the second material box transporter 7200 carrying the material box 770 drives out of the shelf position.

During the above-mentioned transportation process, the first blocking member 730 and the second blocking member 740 respectively block the material box 770 in the width direction and the length direction of the bottom part 710, thus controlling the posture of the material box 770 to a certain extent. The material boxes 770 on the third carrier 750 have a relatively unified posture, which can save storage space to a certain extent and also facilitate the second material box transporter 7200 to stably place the material box in the carrying space of the carrying part 7100 when taking it out.

During the above-mentioned transportation process, not only all the protruding members 725 need to pass through the gaps between the shelf teeth 755 at the same time, but also all the first blocking members 730 and all the second blocking members 740 need to pass through the gaps between the shelf teeth 755 at the same time. That is, the plurality of shelf teeth 755 are adapted to all the protruding members 725, all the first blocking members 730, and all the second blocking members 740, so that all the protruding members 725, all the first blocking members 730, and all the second blocking members 740 can extend from the gaps of the shelf teeth 755 at the same time.

In order to adapt to the shelf teeth 755, in a first implementation, the first blocking member 730 is configured as a baffle. The second blocking member 740 is configured as a stop lever. Of course, the first blocking member 730 can also be configured as a stop lever. The first blocking member 730 and the second blocking member 740 may also be configured in other suitable forms.

A first guide surface 731 is provided on an inner side (the side facing the item) of the first blocking member 730. The first guide surface 731 is inclined outward and upward along the first direction X. A second guide surface 741 is provided on an inner side (the side facing the item) of the second blocking member 740. The second guide surface 741 is inclined outward and upward along the second direction Y. Under the action of the first guide surface 731 and the second guide surface 741, the material box 770 can be easily guided to the support layer 720. In the first implementation, the first blocking member 730 is configured as a blocking piece extending along the second direction Y. The second blocking member 740 is configured as a stop lever, and a plurality of stop levers located on the same side are spaced apart from each other.

Of course, the first blocking member 730 can also be configured as a stop lever, and a plurality of stop levers located on the same side are spaced apart from each other. Generally, the shelf teeth 755 are disposed at the lowest layer of the third carrier 750, so the second material box transporter 7200 is configured to transport goods from the lowest layer of the third carrier 750 or place the goods on the lowest layer of the third carrier 750. In this case, the warehousing system 7300 further includes at least one high-altitude work robot (not shown) configured to transport goods from other layers of the third carrier 750 or place the goods on other layers of the third carrier 750. Therefore, the second material box transporter 7200 works together with the high-altitude work robot to complete the transportation of the goods.

As shown in FIG. 13, in the second implementation, the protruding member 725 of the carrying part 7100 is configured in a protruding shape. The plurality of protruding members 725 are scattered on the first side 711 of the bottom part 710, that is, the plurality of protruding members 725 are arranged at intervals along the first direction X and are also arranged at intervals along the second direction Y. For example, the plurality of protruding members 725 are arranged on the first side 711 in the form of a two-dimensional dot matrix (the plurality of protruding members 725 are arranged at equal intervals along the first direction X, and/or the plurality of protruding members 725 are arranged at equal intervals along the second direction Y). A cross-sectional shape of the protruding member 725 is, for example, a circle, an ellipse, a rectangle, a regular polygon, etc. The first blocking member 730 and the second blocking member 740 are also provided on the first side 711 of the bottom part 710. The plurality of first blocking members 730 are respectively disposed on both sides of the support layer 720 along the first direction X. The plurality of second blocking members 740 are respectively disposed on both sides of the support layer 720 along the second direction Y. The first blocking member 730 and the second blocking member 740 extend beyond the protruding member 725 in the height direction Z on the first side 711. Therefore, the first blocking member 730 and the second blocking member 740 surround the supporting layer 720, so that the posture of the item located on the support layer 720 is controlled to a certain extent.

Similar to the first implementation, in order to enable the carrying part 7100 to be adapted for items of various sizes, all of the first blocking members 730 are provided along the edge of the bottom part 710, and/or all of the second blocking members 740 are provided along the edge of the bottom part 710, to fully increase the bottom area of the carrying space of the carrying part 7100.

Regarding remaining unexplained parts in the second implementation, reference may be made to the description in the first implementation. In a third implementation of the present disclosure that is not shown, the first blocking member 730 is provided on the protruding member 725 and the second blocking member 740 is provided on the bottom part 710. In a fourth implementation of the present disclosure that is not shown, the first blocking member 730 is provided on the bottom part 710 and the second blocking member 740 is provided on the protruding member 725. Regarding the remaining unexplained parts of the third and fourth implementations, reference may be made to the descriptions of the first and second implementations.

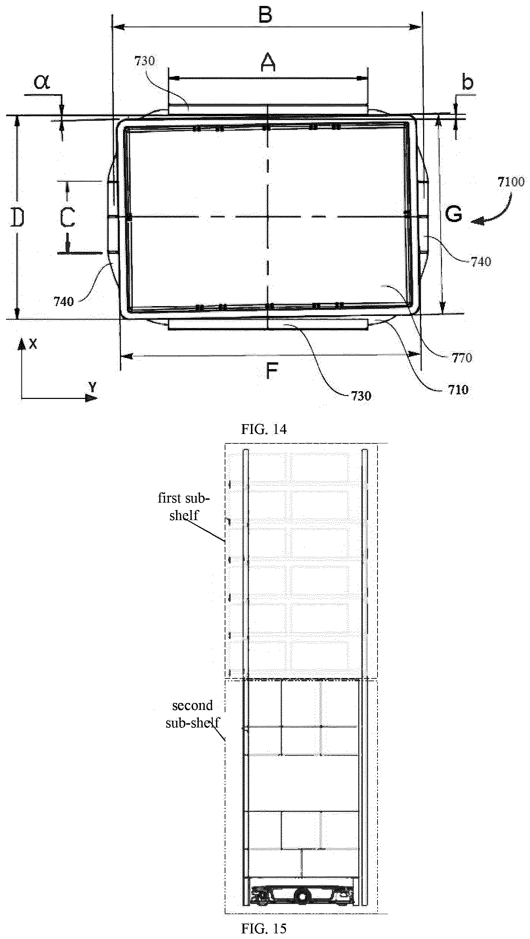

As shown in FIG. 14, the first blocking member 730 and the second blocking member 740 of the carrying part 7100 are located at the edge of the bottom part 710 of the carrying part 7100. The carrying part 7100 has a symmetrical structure. A distance between the two rows of first blocking members 730 spaced apart in the width direction X of the carrying part 7100 is D. A total span (total length in the length direction Y) of the first blocking member 730 is A. A distance between the two columns of second blocking members 740 spaced apart in the length direction Y of the carrying part 7100 is B. A total span (total width in the width direction X) of the second blocking member 740 is C. The material box 770 (for example, in the shape of cuboid) has a length of F and a width of G. When the material box 770 is placed on the carrying part 7100, if the center of the material box 770 coincides with the center of the carrying part 7100, a movable distance b of the material box 770 relative to the carrying part 7100 is:

$$b = \sqrt{G^2 + F^2} \times \sin(\arccos\frac{G}{\sqrt{A^2+D^2}} \cdot \arctan\frac{A}{D} + \arctan\frac{G}{F}) \cdot G \qquad (1)$$

In some embodiments, the movable distance b of the material box 770 relative to the carrying part 7100 is:

$$b = \sqrt{C^2 + B^2} \times \sin(\arccos\frac{F}{\sqrt{C^2+B^2}} \cdot \arctan\frac{C}{B} + \arctan\frac{G}{F}) \cdot G \qquad (2)$$

A rotatable angle $\alpha$ of the material box 770 relative to the carrying part 7100 is:

$$a = arccos(\frac{G}{\sqrt{A^2+D^2}}) - arctan(\frac{A}{D}) \qquad (3)$$

In some embodiments, the rotatable angle $\alpha$ of the material box 770 relative to the carrying part 7100 is:

$$a = arccos(\frac{F}{\sqrt{C^2+B^2}}) - arctan(\frac{C}{B}) \qquad (4)$$

When the sizes of the material box 770 and the carrying part 7100 are known, it can be seen from the above formulas (1)-(4) that the carrying part 7100 can limit the movable distance and the rotatable angle of the material box 770, that is, controlling the posture of the material box 770 to a certain extent. On the contrary, if it is desired to control the posture of the material box 770 within a preset range, the span A of the first blocking member 730 and the span C of the second blocking member 740 can be deduced according to the preset range, that is, the parameters of the carrying part 7100 can be modified according to actual needs.

In a fifth implementation not shown in this disclosure, the carrying part 7100 is provided with the first blocking member 730. In a sixth implementation not shown in this disclosure, the carrying part 7100 is provided with the second blocking member 740. Therefore, the carrying part 7100 can control the posture of the material box in one direction (length direction or width direction) as needed, and the carrying part 7100 cannot restrict the size of the item in the other direction (width direction or length direction). Regarding the remaining unexplained parts of the fifth and sixth implementations, reference may be made to the descriptions of the first and second implementations.

In a seven implementation not shown in this disclosure, the carrying part 7100 is not provided with the first blocking member 730 and the second blocking member 740, so that the carrying part 7100 does not restrict the size of the item to a certain extent, which may significantly improve the applicability of the carrying part 7100.

The different configurations of the first blocking member 730 and the second blocking member 740 on the carrying part 7100 need to match the shelf teeth of the third carrier 750 of the warehousing system 7300, so that not only all the protruding members 725 can extend from the gaps of the shelf teeth 755 at the same time, and the configured first blocking member 730 and/or the second blocking member 740 can also extend from the gaps of the shelf teeth 755 at the same time. According to the carrying part of the present disclosure, by arranging the protruding members spaced apart from each other, the carrying part can cooperate with the comb teeth of the warehousing device (such as shelf, transmission belt, etc.) to complete the transportation of goods.

In other embodiments, as shown in FIG. 15, the first-type carrier, such as the second shelf, may include a first sub-shelf and a second sub-shelf. The first sub-shelf is arranged above the second sub-shelf, a structure of the first sub-shelf is different from a structure of the second sub-shelf, and a grid opening of the first sub-shelf is the same as a grid opening of the first shelf. A fourth operating area for the first robot to operate is also included between each two second shelves.

In some embodiments, the first robot is also configured to operate in the fourth operating area and the first operating area after receiving the outbound transporting task, to transport the material box of target goods on the first sub-shelf to the second target goods cache position. The second target goods cache position is located at the lowest layer of the first shelf in the first area. The storage density can be increased and the vertical space of the warehouse can be fully used.

The second robot is also configured to operate in the second operating area after receiving the outbound transporting task to transport the material box of the target goods to the first mixed picking work platform.

The first robot is also configured to operate in the fourth operating area to transport the material box of target goods on the first sub-shelf to a target grid opening of the second sub-shelf.

The third robot is configured to operate in the third operating area after receiving the outbound transporting task, to transport the second sub-shelf corresponding to the target goods to the second mixed picking work platform or the first mixed picking work platform.

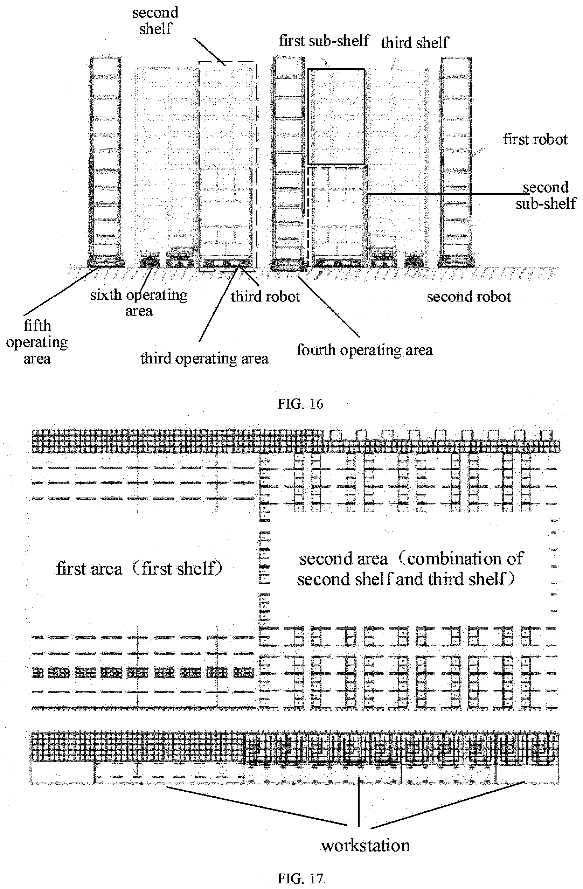

In some embodiments, as shown in FIG. 16, the second area may further include a third shelf, and the third shelf has the same structure as the first shelf. Each third shelf is located on one side of each second shelf, a fifth operating area for the first robot to operate is provided between each two third shelves, and a sixth operating area for the second robot to operate is provided at the bottom of the third shelf. The types of goods stored in the first shelf and the third shelf are the same. For example, the third shelf can store material-box-stored goods.

In some embodiments, the first robot is also configured to operate in the fifth operating area and the fourth operating area after receiving the outbound transporting task, to transport the material box of the target goods on the first sub-shelf to a third target goods cache position of the third shelf.

The second robot is also configured to transport the material box of the target goods at the third target goods cache position to the workstation area, such as the mixed workstation, after receiving the outbound transporting task.

In this embodiment, simultaneous operation and joint scheduling of various robots can be realized. Different solution layouts and the numbers of respective kinds of robots can be selected according to business scenarios and customer needs, which may be more flexible and easier to use in an actual picking operation. Compared with the pure "shelf to humans" solution, the storage density is increased. Compared with the pure "cargo body to humans" solution, the cost is reduced and the efficiency is improved.

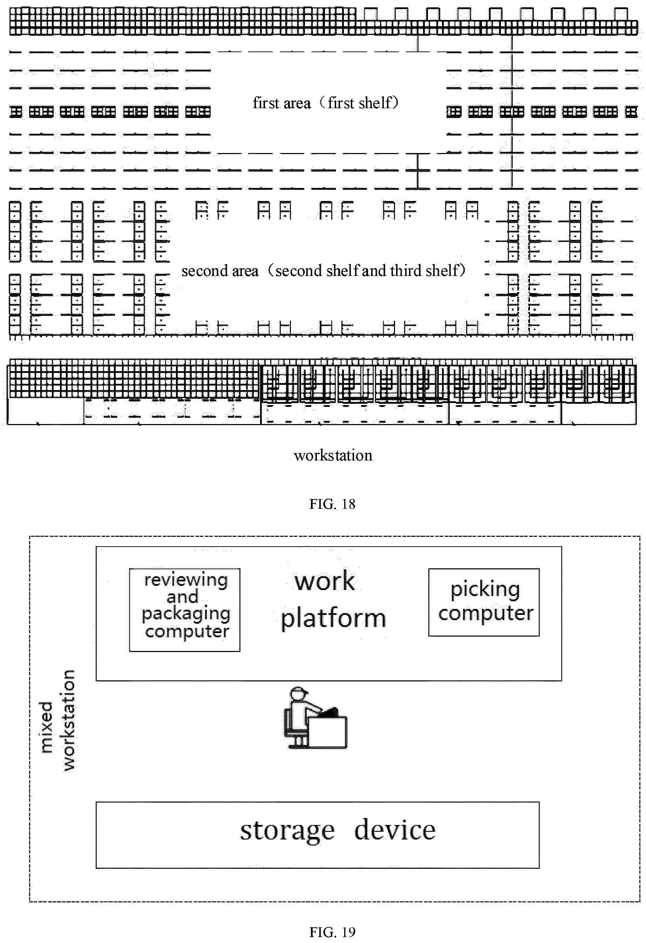

In one embodiment, the layout of the warehousing system may be set as shown in FIG. 17, or may be set to the third layout as shown in FIG. 18. In the third layout, the first area is located on one side of the second area, and a workstation, such as a mixed workstation, is provided on the other side of the second area.

Communication may be performed among the control server, the workstation area, the first robot, the second robot, and the third robot through a network. The control server may include, but is not limited to, various electronic devices such as personal computers, laptops, smart phones, tablets, and portable wearable devices. In addition, the control server can be implemented as an independent server or a server cluster composed of multiple servers, which is not limited here. The first robot, the second robot, and the third robot are configured to perform goods transporting tasks (that is, performing the goods transporting tasks based on transporting instructions). The workstation, such as the mixed workstation, is a location for picking goods. The first shelf and the second shelf are used to place goods.

The control server can obtain commodity information of a target object that needs to be transported after obtaining the outbound scheduling task of the target goods, and determine the target shelf corresponding to the target object based on the commodity information, and then determine the target robot for performing the outbound scheduling task based on the target shelf, and control the target robot to walk in the corresponding target operating area to transport the target object to the corresponding mixed workstation.

The warehousing system proposed in the embodiments of the present disclosure can select different storage area layouts according to business scenarios and customer needs, which may be more flexible and easier to use in an actual picking operation. Compared with the pure "shelf to humans" solution, the storage density is increased. Compared with the pure "cargo body to humans" solution, the cost is reduced and the efficiency is improved. In addition, the storage area layout proposed in the embodiment of the present disclosure can maximize the usage of vertical storage space. When the storage demand is increased, a first sub-shelf can be provided above the second sub-shelf, in which the first sub-shelf includes the storage goods position corresponding to the goods transported by the first robot, thereby making full use of advantages of mixed movement.

Referring to FIG. 19, in some embodiments, the mixed workstation according to an embodiment of the present disclosure includes a work platform and a reviewing and packaging computer and a picking computer provided on the work platform. The mixed workstation is also provided with a storage device, and the storage device is configured to store the goods picked and/or reviewed and packaged.

The work platform is usually configured as a table made of wood or metal with a work platform top, and its height is suitable for staffs to handle goods on the work platform top in a standing or sitting position. The work platform is the mixed picking work platform, the first work platform or the second work platform.

The picking computer is configured to receive orders to be picked and to send orders that have been picked.

When the first-type carrier or the material box on the second-type carrier is transported to a specified mixed workstation in the workstation area, the staff member performs the picking task based on the picking order received by the picking computer. After the picking is completed, the completed order is sent to a downstream work platform or master control system.

The reviewing and packaging computer is configured to receive orders to be reviewed and packaged and to send orders that have been reviewed and packaged.

When a staff member completes picking based on the picking order, the staff member or another staff member will review and package the picked goods based on the review and packaging order received by the reviewing and packaging computer. After the review and packaging is completed, the order will be sent to the downstream work platform or master control system through the reviewing and packaging computer.

If the reviewing and packaging order corresponding to an order that has been picked is not received, the staff member can also temporarily store these goods on the storage device. In addition, after the goods are reviewed and packaged, they can also be placed on the storage device, so that other transporters can transport the goods on the storage device or the storage device to the downstream workstation.

The storage device may be a shelf or a pallet or other devices capable of storing the goods.

Continuing to refer to FIG. 2, the warehousing system of the embodiments of the present disclosure further includes a control server configured to simultaneously or sequentially call the first-type transporter and the second-type transporter (such as at least two of the first transporter, the second transporter, or the third transporter) based on an order sent by the workstation area (such as the mixed workstation), and control at least two of the first transporter, the second transporter, or the third transporter to transport at least two corresponding ones of the first carrier, the second carrier or the material box on the third carrier storing the goods hit by the order.

The type and the number of the transporters called by the control server depend on the type of goods hit by the order.

For example, when an order hits the bulk goods, the case goods, and the material-box-stored goods at the same time, the control server calls the first transporter and the second transporter, and controls the first transporter and the second transporter to transport the first carrier and the second carrier respectively from the storage area to the mixed workstation in the workstation area, and calls the third transporter to transport the material box on the third carrier from the storage area to the mixed workstation in the workstation area.

When an order hits the bulk goods and the case goods at the same time, the control server calls the first transporter and the second transporter, and controls the first transporter and the second transporter to transport the first carrier and the second carrier respectively from storage area to the mixed workstation in the workstation area.

When an order hits the bulk goods and the material-box-stored goods at the same time, the control server calls the first transporter, and controls the first transporter to transport the first carrier from storage area to the mixed workstation in the workstation area, and calls the third transporter and controls the third transporter to transport the material box on the third carrier from the storage area to the mixed workstation in the workstation area.

When an order hits the case goods and the material-box-stored goods at the same time, the control server calls the second transporter, and controls the second transporter to transport the second carrier from storage area to the mixed workstation in the workstation area, and calls the third transporter and controls the third transporter to transport the material box on the third carrier from the storage area to the mixed workstation in the workstation area.

In the embodiments of the present disclosure, the control server calls three transporters to perform corresponding transporting tasks based on the order sent by the mixed workstation. The order received by the control server can also be sent by the user.

In other words, the control server is configured to receive the order, call the first transporter, the second transporter, and the third transporter based on the order, and control the first transporter, the second transporter, and the third transporter to transport the first carrier, the second carrier, and the material boxes on the third carrier from the storage area to the workstation area.

Continuing to refer to FIG. 2, the control server may include a warehouse management module, a positioning module and a scheduling module.

A database is stored in the warehouse management module, and positions of various types of goods on the first-type carrier and the second-type carrier are marked in the database. For example, the positions of various types of goods on the first carrier, the second carrier and the third carrier are marked in the database. Based on this, the warehouse management module is configured to determine, based on the order, the position of the first-type carrier corresponding to the first type of goods hit by the order, and/or the position of the second-type carrier corresponding to the second type of goods hit by the order.

The positioning module determines, based on position information provided by the warehouse management module, that a path along which at least one of the first-type transporter and the second-type transporter moves from the current position to the first-type carrier and the material box on the second-type carrier in the storage area, and then moves from the storage area to the workstation area after picking the first-type carrier and the material box on the second-type carrier.

The scheduling module is configured to call the first-type transporter and the second-type transporter that are currently idle and closest to the storage area based on the order, to transport the first-type carrier and the material box on the second-type carrier from the storage area to the workstation area.

For example, the warehouse management module is configured to determine, based on the order, a position of the first carrier, a position of the second carrier, and a position of a material box of the third carrier corresponding respectively to the bulk goods, the case goods, and the material-box-stored goods hit by the order.

A map of the warehouse area is stored in the positioning module, and the map shows at least one path along which the first transporter, the second transporter, and the third transporter can move from their respective current positions to the target position.

The positioning module is configured to determine, based on the position information provided by the warehouse management module, that paths along which the first transporter, the second transporter and the third transporter move from the current position to the first carrier, the second carrier and the material box on the third carrier in the storage area, and then move from the storage area to the mixed workstation in the workstation area after picking the corresponding carriers. For example, the path determined by the positioning module is the shortest path.

The scheduling module stores information about all transporters and material box transporters in the warehousing system. The information includes position information and current status information. The current status information includes an idle status or a working status.

The scheduling module is configured to call the first transporter, the second transporter, and the third transporter that are currently idle and closest to the storage area based on the order, and control the first transporter, the second transporter and the third transporter that are currently idle and closest to the storage area to transport the first carrier, the second carrier, and the material box on the third carrier from the storage area to the mixed workstation in the workstation area.

The first carrier, the second carrier, and the third carrier can arrive at the mixed workstation in the workstation area sequentially or simultaneously. The specific arrival method can be determined by those skilled in the art according to factors such as a size of the workstation area and the configuration of picking staffs and picking equipments.

In FIG. 2, one mixed workstation is provided in the workstation area of the warehousing system. Based on the size of the workstation area and the load of the picking tasks to be handled in the warehousing system, those skilled in the art can configure two or more mixed workstations in the workstation area. These mixed workstations can handle the picking tasks simultaneously.

After the picking task is completed by humans or picking robots at the mixed workstation, the reviewing and packaging task can also be directly performed at the mixed workstation. In this way, there is no need to set up the reviewing and packaging work platform in the warehousing system. Of course, there is no need to configure special reviewing and packaging staff or corresponding automation equipment, which simplifies the structure of the warehousing system and improves the efficiency of the warehousing system.

That is, the mixed workstation is further configured to perform the reviewing and packaging of the goods that have been picked. Referring to FIG. 5, some embodiments of the present disclosure also provide another warehousing system, including a storage area, a transporter, a workstation, and a control server.

The transporter includes a first robot, a second robot, and a third robot. The first robot, the second robot, and the third robot have different transporting modes. The storage area includes a first area and a second area; a workstation is provided on one side the first area and/or the second area. The workstation includes a work platform corresponding to at least one of the second robot or the third robot.

The first area includes a plurality of first shelves; a first operating area for the first robot to operate is provided between each two first shelves, and a second operating area for the second robot to operate is provided at the bottom of the first shelf. The second area includes a plurality of second shelves, and a third operating area for the third robot to walk is provided at the bottom of the second shelf. The structures of the first shelf and the second shelf are different, and the first shelf and the second shelf store different types of goods respectively. The third robot is the first-type transporter, and the first robot and the second robot each are the second-type transporter.

The control server is configured to obtain the outbound scheduling task of the target goods, determine the target shelf corresponding to the target goods based on the outbound scheduling task, generate the outbound transporting task, and send the outbound transporting task to the target robot to cause the target robot to execute the outbound scheduling task. The target robot is at least one of the first robot, the second robot, or the third robot. The target shelf is at least one of the first shelf or the second shelf. The outbound transporting task includes position information of the target goods. The first robot is configured to operate within the first operating area after receiving the outbound transporting task, obtain the material box of the target goods on the first shelf, and transport the material box of the garget goods to the first target goods cache position on the first shelf. The first target goods cache position is located at the lowest layer of the first shelf.

The second robot is configured to operate within the second operating area after receiving the outbound transporting task, and transport the material box of target goods placed at the first target goods cache position to the workstation. The third robot is configured to operate within the third operating area after receiving the outbound transporting task, and transport the second shelf corresponding to the target goods to the workstation. The workstation is configured to pick the target goods in the material box or the target goods in the second shelf transported by the target robot.

According to some embodiments of the present disclosure, a scheduling method for a warehousing system is provided, including: obtaining, by a control server, an outbound scheduling task of target goods; determining a target shelf corresponding to the target goods based on the outbound scheduling task of the target goods; in which the target shelf includes a first shelf located in a first area or a second shelf located in a second area; the first shelf and the second shelf have different structures; and determining a target robot for executing the outbound scheduling task based on the target shelf, sending an outbound transporting instruction to the target robot to cause the target robot to execute the outbound scheduling task; in which the target operating area is at least one of a first operating area, a second operating area, or a third operating area; the first operating area is an area between each two first shelves, the second operating area is the bottom of the first shelf, and the third operating area is the bottom of the second shelf; the target robot is at least one of the first robot, the second robot, or the third robot.

As shown in FIG. 5, regarding the specific structure of another warehousing system provided above, reference may be made to the relevant content above, which will not be described again here.

In addition, the embodiments of the present disclosure also provide a mixed picking method for a warehousing system (or can be called a scheduling method for a warehousing system). The mixed picking method is suitable for a mixed picking task of the warehousing system described above. It can also be implemented composed of by other warehousing systems with equivalent functional components.

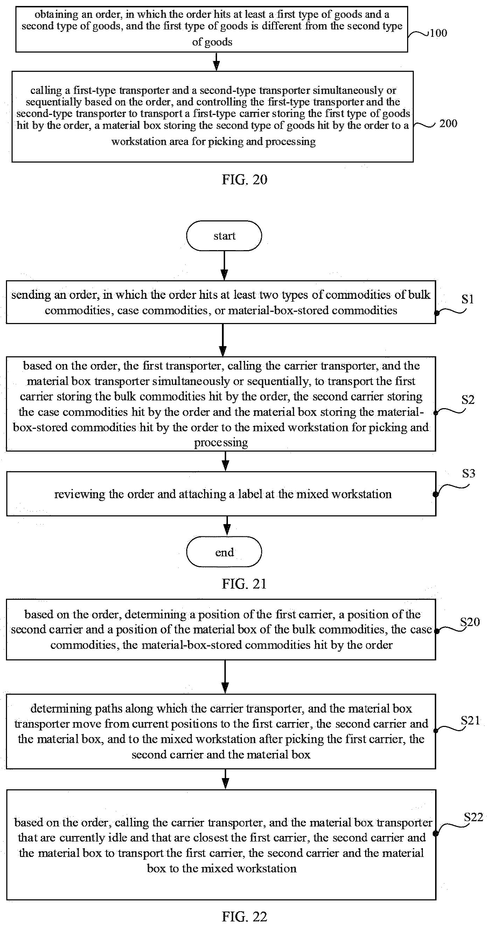

Referring to FIG. 20, the mixed picking method according to the embodiment of the present disclosure includes the following steps.

S100, an order is obtained. The order hits at least a first type of goods and a second type of goods. The first type is different from the second type.

S200, a first-type transporter and a second-type transporter are called simultaneously or sequentially based on the order, and the first-type transporter and the second-type transporter are controlled to transport a first-type carrier storing the first type of goods hit by the order, a material box storing the second type of goods hit by the order to a workstation area for picking and processing.

The workstation area includes at least one mixed workstation, at least one first workstation and at least one second workstation. The first-type transporter is configured to transport the first-type carrier carrying the first type of goods to the mixed workstation or the second workstation. The second-type transporter is configured to transport the material box storing the second type of goods hit by the order to the mixed workstation or the first workstation.

In some of these embodiments, based on a specific type of the goods hit by the order, calling simultaneously or sequentially the first-type transporter and the second-type transporter, and controlling the first-type transporter and the second-type transporter to transport the first-type carrier storing the first type of goods hit by the order and the material box storing the second type of goods hit by the order to the workstation area, specifically includes: determining, based on the order, a position of the first-type carrier corresponding to the first type of goods and a position of the second-type carrier corresponding to the second type of goods hit by the order; determining paths along which the first-type transporter and the second-type transporter move from current positions to the first-type carrier and the material box, and to the corresponding workstations after picking the first-type carrier and the material box; and calling the first-type transporter and the second-type transporter that are closest to the first-type carrier and the material box and that are idle based on the order to transport the first-type carrier and the material box to the corresponding workstations.

Referring to FIG. 21, for example, the mixed picking method of the embodiments of the present disclosure specifically includes the following steps.

S1, an order is sent. The order hits at least two types of goods (or commodities) of bulk goods, case goods, or material-box-stored goods.

Taking the control server side as an example, the control server obtains the order and thereby obtains an outbound scheduling task of target goods hit by the order. The outbound scheduling task is a task that a robot needs to transport the target goods to a workstation, such as a mixed workstation, to perform a task of picking the goods in the corresponding order at the workstation.

After the control server obtains respective orders, the control server can assign the respective orders to respective workstations, and can generate corresponding outbound scheduling tasks based on the goods to be outbound in the orders, so that the corresponding robots may transport, based on the outbound scheduling tasks, the target goods to the corresponding workstations to pick each goods in the order for outbound.

S2, based on the order, the first transporter, the second transporter, and the third transporter are called simultaneously or sequentially, to transport the first carrier storing the bulk goods hit by the order, the second carrier storing the case goods hit by the order and the material box storing the material-box-stored goods hit by the order to the mixed workstation for picking and processing.

In the embodiments of the present disclosure, in order to realize the multi-formats picking mode, an order can hit at least two types of goods at the same time, and based on the order, at least two of the first transporter, the second transporter, or the third transporter can be called simultaneously or sequentially, and at least two of the second transporter, or the third transporter are controlled to transport at least two corresponding ones of the first carrier storing the bulk goods hit by the order, the second carrier storing the case goods hit by the order and the material box storing the material-box-stored goods hit by the order to the mixed workstation for picking and processing.

In some of these embodiments, based on a specific type of the goods hit by the order, step S2 may specifically include the following steps: when the order hits the bulk goods, the case goods and the material-box-stored goods at the same time, calling the first transporter and the second transporter respectively to transport the first carrier and the second carrier to the workstation area, and calling the third transporter to transport the material box to the mixed workstation in the workstation area; when the order hits the bulk goods and the case goods at the same time, calling the first transporter and the second transporter respectively to transport the first carrier and the second carrier to the mixed workstation in the workstation area; when the order hits the bulk goods and the material-box-stored goods at the same time, calling the first transporter to transport the first carrier to the workstation area, and calling the third transporter to transport the material box on the third carrier to the mixed workstation in the workstation area; and when the order hits the case goods and the material-box-stored goods at the same time, calling the second transporter to transport the second carrier to the workstation area, and calling the third transporter to transport the material box on the third carrier to the mixed workstation in the workstation area.

In some embodiments, referring to FIG. 22, step S2 includes the following steps.

S20, based on the order, a position of the first carrier, a position of the second carrier and a position of the material box of the bulk goods, the case goods, the material-box-stored goods hit by the order are determined.

S21, paths along which the first transporter, the second transporter and the third transporter move from current positions to the first carrier, the second carrier and the material box, and to the corresponding workstations after picking the first carrier, the second carrier and the material box are determined.

S22, based on the order, the first transporter, the second transporter and the third transporter that are currently idle and that are closest the first carrier, the second carrier and the material box are called to transport the first carrier, the second carrier and the material box to the mixed workstation.

Referring to FIG. 21, after picking of the order is completed, the mixed picking method of the present disclosure may further include the following steps.

S3, the order is reviewed and a label is attached at the mixed workstation.

For example, after the picking task is completed by humans or picking robots at the mixed workstation, the reviewing and packaging task can be directly performed at the mixed workstation. In this way, there is no need to set up a reviewing and packaging work platform in the warehousing system, and of course there is no need to configure special reviewing and packaging staff or corresponding automation equipment, which simplifies the structure of the warehousing system and improves the working efficiency of the warehousing system. In other embodiments, step S2 may specifically include the following step.

S204, based on the outbound scheduling task of the target goods, a target shelf corresponding to the target goods is determined. The target shelf includes a first shelf located in the first area or a second shelf located in the second area. The first shelf and the second shelf have different structures.

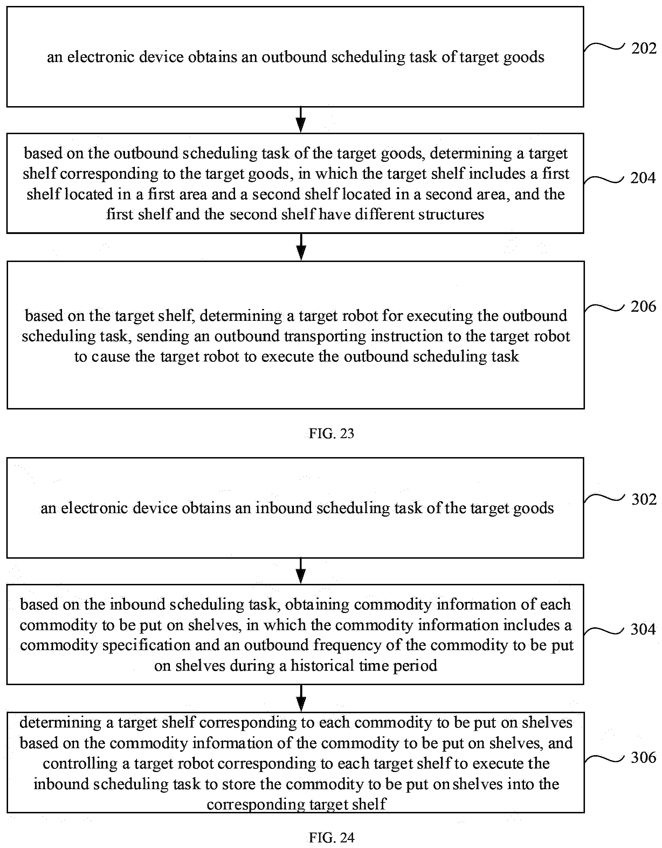

Referring to FIG. 23, before S204, S1 may specifically include the following step.

S202, the control server, such as an electronic device obtains the outbound scheduling task of the target goods.

In S204, the control server determines the target shelf corresponding to the target goods based on the outbound scheduling task of the target goods hit by the order.

The commodity information may include position information of the target goods, position information of a container (cargo body or material box) where the target goods is located, position information of the shelf corresponding to the target goods, a size specification of the target goods, and quantity information of the target goods. etc., which are not limited here. Information about whether goods (material box) is stored in each goods position in each shelf, a position of each shelf, each goods position, etc. may be pre-stored information. After each shelf is put into storage, information of an item stored in each goods position (including a type of the stored goods, a size specification of the stored goods, and quantity information of the stored goods) are stored in advance.

In some embodiments, after obtaining the outbound scheduling task of the target goods, the commodity information of the target goods can be determined, for example, the position information of the shelf where the target item is located and the position information of the goods position where the target item is located, etc., and then the target shelf corresponding to the target goods may be determined.

For example, during a process of putting each goods (cargo body) on the shelf, it may be stored on the first shelf in the first area or the second shelf in the second area according to the size specification of the goods (cargo body). For example, if the size of the goods (cargo body) is larger than a preset size, it will be stored on the second shelf. If the size of the goods (cargo body) is not larger than the preset size, it will be stored on the first shelf.

Furthermore, before determining the target shelf, after obtaining the outbound scheduling task of the target goods, the commodity information of the target goods, for example, the type of the target goods, can be determined first, and then an area corresponding to the target goods can be determined, and it is determined to store the target goods on the first shelf or the second shelf. Then based on the position information of the shelf where the target goods is located and the position information of the goods position where the target goods is located, the target shelf corresponding to the target goods is further determined.

In some embodiments, when the target goods are stored on the first shelf, or at multiple goods positions in the second shelf, the shelf that is closest to the corresponding workstation and includes the goods position for storing the target goods may be preferentially determined as the target shelf.

For example, if the target goods are stored in shelf a, shelf b, and shelf c in the first shelf, that is, the shelf a, the shelf b, and the shelf c all store the target goods, then the shelf a closest to the corresponding mixed workstation can be determined as the target shelf.

In other embodiments, if the target goods are stored in the second shelf, the shelf in the same second shelf that has the most goods to be outbound of an order can be used as the target shelf.

For example, if the target goods correspond to the second shelf, and the order corresponding to the target goods includes multiple other objects to be outbound, for example, order A includes target goods c, object d, and object e, the target goods c exists in both shelf q and shelf s in the second shelf, the shelf q also stores object d and object e, and shelf s stores object e, then shelf q may be preferentially determined as the target shelf. Furthermore, the target shelf can be directly transported to the workstation by the third robot, so that the most objects to be outbound can be transported to the corresponding workstation, such as a mixed workstation, at once, thus saving the number of transportation times and improving the outbound efficiency.

S206, based on the target shelf, the target robot for executing the outbound scheduling task is determined, and the outbound transporting instruction (i.e., the outbound transporting task) is sent to the target robot, to cause the target robot to execute the outbound scheduling task within the target operating area.

The target operating area is at least one of the first operating area, the second operating area or the third operating area. The first operating area is the area between each two first shelves, and the second operating area is the area at the bottom of the first shelf. The third operating area is the area at the bottom of the second shelf. The target robot is at least one of the first robot, the second robot, or the third robot.

In some embodiments, after determining the target shelf corresponding to the target goods, since different target shelves correspond to different robots for performing transporting tasks, the corresponding target robot can be determined based on the target shelf where the target goods is located.

After the target shelf is determined, if the target shelf is the first shelf, the target goods position of the target goods can be further obtained. Furthermore, if the target goods position is located in a good cache area on the corresponding first shelf, the second robot can be controlled to transport the material box of the target goods in the goods cache area to workstation a corresponding to the second robot. The second robot drives in the second operating area. The workstation a can be set as a first work platform for picking the target goods transported by the second robot, or can be set as a first mixed picking work platform, that is, a work platform used for picking the object transported by the second robot, or can also be set as a work platform for picking the object transported by the third robot, which is not limited here.

If the target shelf is the first shelf and the target goods position corresponding to the target goods is not in the goods cache area, the first robot is controlled to transport the target goods from the target goods position to the first target goods cache area of the first shelf. The first robot drives in the first operating area. Furthermore, the second robot is controlled to transport the target goods in the first target goods cache area to the workstation a corresponding to the second robot. The second robot drives in the second operating area.

In an embodiment, as shown in FIG. 7, if the second shelf is set as a transportable shelf and the target goods is correspondingly stored in the second shelf, the corresponding third robot can be controlled to transport the target shelf to the corresponding workstation b. The third robot drives in the third operating area, and the third operating area is located at the bottom of the second shelf. The workstation b can be set as a second work platform for picking the target shelf transported by the third robot (i.e., the second mixed picking work platform), or can also be set as a mixed picking work platform (i.e., the first mixed picking work platform), that is, a working platform for picking the shelf transported by the third robot, or can be set as a working platform for picking the object transported by the second robot, which is not limited here.

In another embodiment, as shown in FIG. 15, the second shelf may be a combined shelf including a first sub-rack and a second sub-rack. In other embodiments, referring to FIG. 16, there is a third shelf next to the combined shelf.

For example, step S206 of determining the target robot for executing the outbound scheduling task based on the target shelf, and sending the outbound transporting instruction (i.e., the outbound transporting task) to the target robot, to cause the target robot to execute the outbound scheduling task, specifically include the following steps.

S2062, in a case where the target shelf is the first shelf, the first robot is determined as the target robot, and the outbound transporting task is sent to the first robot to cause the first robot to operate in the first operating area after receiving the outbound transporting task, obtain the material box of the target goods on the first shelf, and transport the material box of the target goods to a first target goods cache position on the first shelf. The first target goods cache position is located at the lowest layer, i.e., the temporary storage position of the first shelf.

In some embodiments, if the hit target shelf is the first shelf, the first robot is determined as the target robot, and the outbound transporting task is sent to the first robot, so that after receiving the outbound transporting task, the first robot operates in the first operating area, obtains the material box of the target goods on the first shelf, and transports the material box of the target goods to the first target goods cache position on the first shelf.

S2064, when the first robot transports the material box of the target goods to the first target goods cache position on the first shelf, the second robot is determined as the target robot, and the outbound transporting task is sent to the second robot to cause the second robot to operate in the second operating area after receiving the outbound transporting task and transport the material box of the target goods placed on the first target goods cache position to the mixed picking work platform or the first work platform in the workstation area.

In some embodiments, if the hit target shelf is the first target goods cache position on the first shelf, the second robot is determined as the target robot, and the outbound transporting task is sent to the second robot, so that after receiving the outbound transporting task, the second robot operates in the second operating area, to transport the material box of the target goods placed on the first target goods cache position to the mixed picking work platform (i.e., the first mixed picking work platform) in the workstation area.

If the workstation determined in the outbound transporting task is the first work platform, the second robot transports the material box of target goods placed on the first target goods cache position to the first work platform in the workstation. If the workstation determined in the outbound transporting task is the mixed picking work platform, the second robot transports the material box of target goods placed on the first target goods cache position to the mixed picking work platform in the workstation, that is, to the mixed workstation.

S2066, in a case where the target shelf is the second shelf, the third robot is determined as the target robot, and the outbound transporting task is sent to the third robot to cause the third robot to operate in the third operating area after receiving the outbound transporting task and transport the second shelf corresponding to the target goods to the second work platform (i.e., the second mixed picking work platform) or the mixed picking work platform (i.e., the first mixed picking work platform) in the workstation.

In some embodiments, the hit target shelf is the second shelf, and the outbound transporting task may be sent to the third robot, so that after receiving the outbound transporting task, the third robot operates in the third operating area to transport the second shelf corresponding to the target goods to the second work platform or mixed picking work platform in the workstation.

If the workstation determined in the outbound transporting task is the second work platform, the third robot transports the second shelf to the second work platform in the workstation. If the workstation determined in the outbound transporting task is the mixed picking work platform, the second robot transports the second shelf to the mixed picking work platform in the workstation.

In this embodiment, it is possible to realize simultaneous operation and joint scheduling of various robots, and make full use of the storage space, set up combined shelves to better combine operation scheduling between robots, so as to improve the outbound efficiency.

In some embodiments, as shown in FIG. 15, the second shelf includes a first sub-shelf and a second sub-shelf. The first sub-shelf is disposed above the second sub-shelf. The structure of the first sub-shelf is different from that of the second sub-shelf. The grid opening of the first sub-shelf has the same size as the grid opening of the first shelf. A fourth operating area for the first robot to operate is provided between each two second shelves. The scheduling method for a warehousing system also includes the following steps.

S302, in a case where the target shelf is the first sub-shelf, the first robot is determined as the target robot, and the outbound scheduling task is sent to the first robot to cause the first robot to operate in the fourth operating area and the first operating area after receiving the outbound transporting task and transport the material box of the target goods of the first sub-shelf to a second target goods cache position, or to cause the first robot to operate in the fourth operating area and transport the material box of the target goods of the first sub-shelf to a target gird opening of the second sub-shelf.

In some embodiments, if the hit target shelf is the first sub-shelf of the second shelf in the second area, the outbound scheduling task may be sent to the first robot first, so that after receiving the outbound transporting task, the first robot operates in the fourth operating area and the first operating area, to transport the material box of the target goods of the first sub-shelf to the second target goods cache position, or so that the first robot operates in the fourth operating area, to transport the material box of the target goods of the first sub-shelf to the target gird opening of the second sub-shelf.

When the first robot operates in the fourth operating area and transports the material box of the target goods of the first sub-shelf to the target gird opening of the second sub-shelf, the third robot can subsequently transport the second sub-shelf to the workstation area, and at the same time, the first robot and the second robot can perform other transporting tasks, so as to enhance joint scheduling between robots.

S304, when the first robot transports the material box of the target goods to the second target goods cache position, the second robot is determined as the target robot, and the outbound transporting task is sent to the second robot to cause the second robot to operate in the second operating area and transport the material box of the target goods to the workstation.

In some embodiments, if the material box of the target goods has been transported to the second target goods cache position, the second robot is required to transport the material box to the corresponding workstation, such as a mixed workstation.

S306, in a case where the target shelf is the second sub-shelf and the material box of the target goods is placed at the target grid opening, the third robot is determined as the target robot, and the outbound scheduling task is sent to the third robot to cause the third robot to operate in the third operating area after receiving the outbound transporting task and transport the second shelf corresponding to the target goods to the workstation area.

In some embodiments, when the hit target shelf is the second sub-shelf and the material box of the target goods is located at the target grid opening, the third robot is determined as the target robot and the outbound transporting task is sent to the third robot, so that after receiving the outbound transporting task, the third robot may operate in the third operating area and transport the second shelf corresponding to the target goods to the workstation area.

Furthermore, in order to increase the storage density, a third shelf may be provided in the second area. Referring to FIG. 16, the structure of the third shelf is the same as that of the first shelf. Each third shelf is located on one side of each second shelf. A fifth operating area for the first robot to operate may be provided between each two third shelves. A sixth operating area for the second robot to operate is provided at the bottom of the third shelf. The scheduling method for a warehousing system also includes the following steps.

S402, in a case where the target shelf is the first sub-shelf, the first robot is determined as the target robot, and the outbound transporting task is sent to the first robot to cause the first robot to operate in the fifth operating area and the fourth operating area and transport the material box of the target goods of the first sub-shelf to a third target goods cache position of the third shelf. The third target goods cache position is located at the lowest layer of the third shelf.

S404, when the first robot transports the material box of the target goods to the third target goods cache position, the second robot is determined as the target robot, and the outbound transporting task is sent to the second robot to cause the second robot to transport the material box of the target goods at the third target goods cache position to the workstation area.

In the embodiment of the present disclosure, through different outbound scheduling schemes of robots corresponding to different shelves, it is possible to realize simultaneous operation and joint scheduling of various robots, make full use of the storage space, set up combined shelves to better combine operation scheduling between robots, so as to improve the outbound efficiency.

When both the work platform corresponding to the second robot and the work platform corresponding to the third robot are needed in the warehousing system, workstations need to be allocated reasonably. Based on this, in one embodiment, the scheduling method for a warehousing system also includes the following steps.

S102, a plurality of target outbound orders are obtained. The target outbound order includes at least one target commodity for outbound.

The target outbound order may be an order issued by an upstream system. Each target outbound order includes at least one target commodity for outbound. The target commodity may be located on a cargo body (material box) or a shelf.

S104, a warehouse storage area corresponding to each target commodity is obtained.

The shelves and goods positions where the target commodities are distributed in the warehouse storage area are known.

S106, when the obtained warehouse storage area includes the first area and the second area, a first order quantity of orders corresponding to the warehouse storage area that includes the first area and a second order quantity of orders corresponding to the warehouse storage area that includes the second area are determined.

In some embodiments, when it is determined that the target commodities in various target outbound orders may correspond to the shelves in the first area and the second area, the first order quantity of the target outbound orders including the target commodities corresponding to the first area and the second order quantity of the target outbound orders including the target commodities corresponding to the second area can be statistically calculated.

S108, according to a proportion of the first order quantity to a total quantity of all target outbound orders and a proportion of the second order quantity to the total quantity of all target outbound orders, the workstation is configured as a mixed picking work platform (i.e., the first mixed picking work platform), that is the workstation is the mixed workstation. The mixed picking work platform is a work platform for picking the target object transported by the second robot or the target object transported by the third robot.

In some embodiments, the first proportion of the first order quantity to the total quantity of all target outbound orders, and the proportion of the second order quantity to the total quantity of all target outbound orders may be determined respectively. Then, according to the first proportion and the second proportion, the numbers of workstations corresponding respectively to the second robot and the third robot may be determined. That is, the mixed work platform including two different work platforms is set up.

For example, if each target commodity in each target outbound order is in the first area, all the workstations can be configures as the first work platforms corresponding to the second robot.

IF each target commodity in each target outbound order is in the second area and each second shelf in the second area is not a combined shelf, all the workstations can be configures as the second work platforms corresponding to the third robot.

Among the plurality of second shelves, some of the first shelves are configured to store the bulk goods, and some of the first shelves are configured to store the case goods, then the second work platform may be understood as a mixed work platform (i.e. the second mixed picking work platform mentioned above). In some embodiments, the number of the second work platforms can be adaptively adjusted according to the order quantity of the bulk goods and the case goods.

Further, in other embodiments, the workstations can be configured as the first mixed picking work platforms. The first mixed picking work platform is a work platform for picking the target object transported by the second robot and the target object transported by the third robot.

In some embodiments, the number of the first mixed picking work platforms and the number of the second mixed picking work platforms in the workstations can be determined according to the first order quantity and the second order quantity. For example, when the first order quantity is greater than the second order quantity, the number of the first mixed picking work platforms may be set to be greater than the number of the second mixed picking work platforms. When the first order quantity is less than the second order quantity, the number of the first mixed picking work platforms may be set to be less than the number of the second mixed picking work platforms.

In the embodiment of the present disclosure, by obtaining multiple target outbound orders, the warehouse storage area corresponding to each target commodity, when the obtained warehouse storage area includes the first area and the second area, determining the first order quantity of orders corresponding to the warehouse storage area that includes the first area and the second order quantity of orders corresponding to the warehouse storage area that includes the second area, and further configuring the workstation as the mixed picking work platform according to the proportion of the first order quantity to the total quantity of all target outbound orders and the proportion of the second order quantity to the total quantity, the mixed picking work platform can be set up according to a reasonable proportion. During the operation of the warehousing system, three kinds of workstations can changed to each other according to the business scenario, and the number of the three kinds of workstations can be adjusted, to realize mixed picking during periods with a large number of orders.

The outbound scheduling in the scheduling method for a warehousing system has been explained in the above embodiments. The scheduling for the warehousing system also includes the inbound scheduling of commodity goods. The inbound scheduling of the scheduling for the warehousing system will be described in one embodiment. In one embodiment, as shown in FIG. 24, the scheduling method for a warehousing system also includes the following steps.

S302, the control server, such as an electronic device, obtains an inbound scheduling task of the target goods.

The inbound scheduling task is a task of putting goods on shelves in the warehouse storage area. The inbound scheduling task includes commodity information of each commodity to be put on shelves and the number of the commodities to be put on shelves.

When perform the inbound scheduling task, the outbound scheduling task is not executed.

S304, based on the inbound scheduling task, commodity information of each commodity to be put on shelves is obtained. The commodity information includes a commodity specification and an outbound frequency of the commodity to be put on shelves during a historical time period.

In some embodiments, after obtaining the inbound scheduling task, information such as the commodity specification of each commodity to be put on the shelves and the outbound frequency of the commodities to be put on the shelves during the historical time period can be obtained.

S306, a target shelf corresponding to each commodity to be put on shelves is determined based on the commodity information of the commodity to be put on shelves, and a target robot corresponding to each target shelf is controlled to execute the inbound scheduling task to store the commodity to be put on shelves into the corresponding target shelf.

After obtaining the commodity information of the commodity to be put on the shelves, the target shelf corresponding to the commodity to be put on the shelves can be determined based on the commodity specification or type in the commodity information. For example, the commodity specification of each commodity to be put on the shelves can be compared with a preset size, and the target shelf can be obtained based on the comparison result. In this way, the advantages of the "shelf to humans" solution and the "cargo body to humans" solution can be combined, so that it can be applied to various complex picking scenarios involving large, medium and small commodities of different commodity specifications.

For another example, the commodity type of each commodity to be put on the shelves can be compared with a preset type, and the target shelf can be determined based on the comparison result. The preset type includes three types, including the bulk goods, the case goods and the material-box-stored goods.

In another embodiment, step S306 specifically includes the following steps.

S3062, in a case where the commodity specification of the commodity to be put on shelves is greater than the preset size, the second shelf is determined as the target shelf, the third robot is controlled to transport the second shelf to a first shelfing work platform of the workstation, and the third robot is controlled to transport the target shelf to an original position after storing the commodity to be put on shelves into the target shelf.

S3064, in a case where the commodity specification of the commodity to be put on shelves is less than or equal to the preset size, the target shelf corresponding to each commodity to be put on shelves is determined based on the outbound frequency of the commodity to be put on shelves, the target robot corresponding to each target shelf is controlled to execute the inbound scheduling task to store the commodity to be put on shelves into the corresponding target shelf.

In another embodiment, the commodity type of each commodity to be put on the shelves can be compared with the preset type. When the comparison result indicates that the commodity type of the commodity to be put on the shelves is consistent with the type of bulk goods, the second shelf is determined as the target shelf. When the comparison result indicates that the commodity type of the commodity to be put on the shelves is consistent with the type of material-box-stored goods, the first shelf is determined as the target shelf.

Further, step S3064 specifically includes the following steps.

S3064a, in a case where the outbound frequency of the commodity to be put on shelves is greater than a preset frequency threshold, the second shelf is determined as the target shelf, the third robot is controlled to transport the second shelf corresponding to the commodity to be put on shelves to the first shelfing work platform of the workstation, and the third robot is controlled to transport the target shelf back to the original position when storing the commodity to be put on shelves into the target shelf.

In some embodiments, if the outbound frequency of the commodity to be put on shelves is greater than the preset frequency threshold, a carrying state of each goods position in the second shelf is obtained.

In a case where the second shelf has a goods position carrying no goods, the second shelf is used as the target shelf, and the third robot is controlled to transport the second shelf corresponding to the commodity to be put on the shelves to the first shelfing work platform of the workstation, and when the commodity to be put on the shelves is stored into the target shelf, the third robot is controlled to transport the target shelf back to the original position.

If all goods positions in the second sub-shelf carry the goods, the first robot is controlled to operate in the fourth operating area and transport the commodity to be put on the shelves to the first sub-shelf in the second area.

S3064b, in a case where the outbound frequency of the commodity to be put on shelves is not greater than the preset frequency threshold, the first shelf is determined as the target shelf, the second robot is controlled to operate in the second operating area and transport a first target material box in the first shelf to a second shelfing work platform of the workstation, and the second robot is controlled to transport the first target material box back to the first shelf when storing the commodity to be put on shelves into the first target material box; or the third shelf is determined as the target shelf, the second robot is controlled to operate in the sixth operating area to transport a second target material box corresponding to the commodity to be put on shelves to the second shelfing work platform of the workstation, and the second robot is controlled to transport the second target material box back to the third shelf when storing the commodity to be put on shelves into the second target material box.

In the embodiment of the present disclosure, based on the commodity specification and the outbound frequency of the commodity to be put on the shelves, in consideration with the distribution of the inbound goods and the corresponding shelves, the storage area can be reasonably allocated, so as to facilitate the outbound process of the commodities.

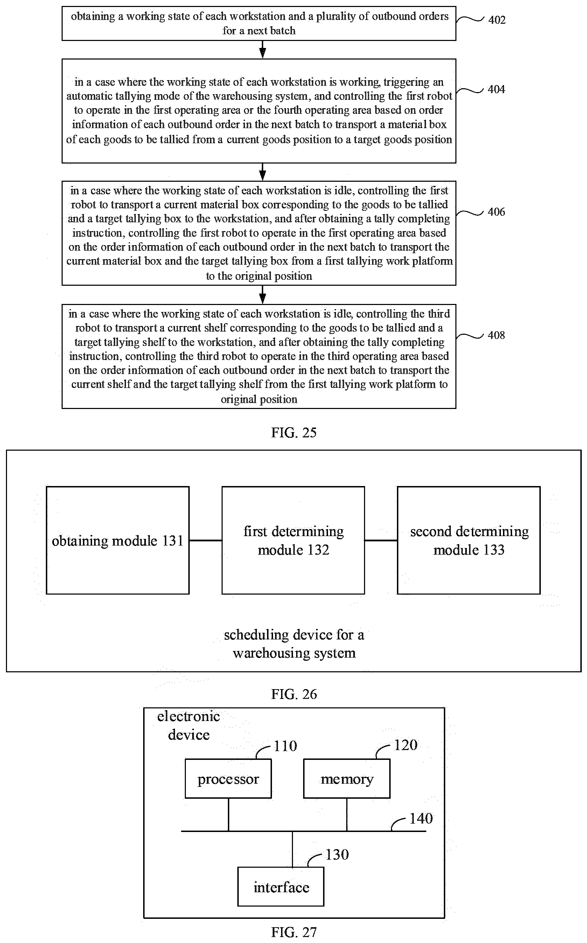

The inbound scheduling in the scheduling method for a warehousing system has been explained in the above embodiments. The scheduling process for a warehousing system also includes the tallying process. The tally scheduling in the scheduling process for a warehousing system will be described in one embodiment. In one embodiment, as shown in FIG. 25, the scheduling method for a warehousing system also includes the following steps.

S402, a working state of each workstation and a plurality of outbound orders for a next batch are obtained.

When each workstation is working, the working state is working. When the workstation is not working, the working state is idle. The next batch of multiple outbound orders are the outbound orders for which outbound tasks are to be executed.

S404, in a case where the working state of each workstation is working, an automatic tallying mode of the warehousing system is triggered, and the first robot is controlled to operate in the first operating area or the fourth operating area based on order information of each outbound order in the next batch to transport a material box of each goods to be tallied from a current goods position to a target goods position.

In some embodiments, when the working state of each workstation is working, the tally task can be performed while executing the outbound scheduling task. Based on the order information of each outbound order in the next batch, optimal allocation can be performed to adjust the goods position of each commodity in the next batch of outbound orders and determine the target goods. That is, when the robot performs the outbound scheduling tasks of the outbound orders in the next batch according to the target goods positions, the robot can travel along the shortest path, or the robot performs the optimal number of transportations.

Optionally, when the goods to be tallied corresponds to the first shelf in the first area, the goods to be tallied can be adjusted to the free goods position in the shelf that is closer to the workstation.

Optionally, when the goods to be tallied corresponds to the second shelf in the second area, the goods to be tallied in the same order can be adjusted to the same second shelf as much as possible, so that the robot can directly perform the outbound process of the goods to be outbound in the order.

After the target goods position is determined, the first robot can be controlled to operate in the first operating area based on the order information of each outbound order in the next batch to transport each goods to be tallied from the original shelf to the target goods position corresponding to each target goods in each outbound order. The first robot can also be controlled to operate in the fourth operating area to transport each goods to be tallied from the original shelf to the target goods position corresponding to each target goods in each outbound order.

S406, in a case where the working state of each workstation is idle, the first robot is controlled to transport a current material box corresponding to the goods to be tallied and a target tallying box to the workstation, and after obtaining a tally completing instruction, the first robot is controlled to operate in the first operating area based on the order information of each outbound order in the next batch to transport the current material box and the target tallying box from a first tallying work platform to the original position.

In some embodiments, when the working state of each workstation is idle, the first robot can be controlled to transport the goods to be tallied to the workstation, so that the staff member can trigger the tally completing instruction after determining that the goods to be tallied is at the target shelf and/or target goods position. The first robot can be controlled to operate in the first operating area based on the order information of each outbound order in the next batch to transport the goods to be tallied from the workstation to the target goods position corresponding to each target goods in each outbound order.

S408, in a case where the working state of each workstation is idle, the third robot is controlled to transport a current shelf corresponding to the goods to be tallied and a target tallying shelf to the workstation, and after obtaining the tally completing instruction, the third robot is controlled to operate in the third operating area based on the order information of each outbound order in the next batch to transport the current shelf and the target tallying shelf from the first tallying work platform to original position.

In some embodiments, when the working state of each workstation is idle, the third robot can be controlled to transport the current shelf corresponding to the goods to be tallied and target tallying shelf to the workstation. After the tally completing instruction is obtained, the third robot is controlled to operate in the third operating area based on the order information of each outbound order in the next batch to transport the current shelf and target tallying shelf from the first tallying work platform to the original position.

If the second shelf in the corresponding first layout is a transportable shelf, the automatic tallying mode can be implemented in the first area.

In the embodiment of the present disclosure, tallying can be performed based on two different tallying modes, so that when performing the next batch of outbound scheduling tasks, the storage and placement of goods are more reasonable, thereby optimizing the outbound efficiency and saving the outbound time.

Referring to FIG. 23, the embodiments of the present disclosure also provide another scheduling method for a warehousing system, including the following steps.

S202, the control server obtains an outbound scheduling task of target goods.

S204, based on the outbound scheduling task of the target goods, a target shelf corresponding to the target goods is determined. The target shelf includes a first shelf located in a first area and a second shelf located in a second area. The first shelf and the second shelf have different structures.

S206, based on the target shelf, a target robot for executing the outbound scheduling task is determined, an outbound transporting instruction is sent to the target robot to cause the target robot to execute the outbound scheduling task. The target operating area includes at least one of a first operating area, a second operating area or a third operating area. The first operating area is an area between each two first shelves. The second operating area is an area at the bottom of the first shelf. The third operating area is an area at the bottom of the second shelf. The target robot is at least one of a first robot, a second robot or a third robot.

The above-mentioned scheduling method may correspond to the warehousing system shown in FIG. 5. For the specific process, reference may be made to the relevant content above, which will not be described again here.

The above embodiment explains only an optional example of the scheduling method for a warehousing system. The scheduling method for a warehousing system may also include other implementable embodiments, which are not limited herein. Regarding the specific limitations and the beneficial effects of the scheduling device for a warehousing system, reference may be made to the limitations on the scheduling method for a warehousing system described above, which will not be repeated here.

Based on the same inventive concept, the embodiments of the present disclosure also provide a scheduling device for a warehousing system configured to implement the above-mentioned scheduling method for a warehousing system. The solution of solving the problems provided by the device is similar to the solution described in the above method embodiments. Therefore, for the specific limitations in one or more following embodiments of the scheduling device for a warehousing system, reference may be made to the above limitations on the scheduling method for a warehousing system, which will not be repeated here. In some embodiments, FIG. 25 is a block diagram of a scheduling device for a warehousing system according to an embodiment of the present disclosure. As shown in FIG. 26, the device includes an obtaining module and a controlling module.

The obtaining module 131 is configured to obtain an order, in which the order hits first type of goods and second type of goods. For example, the obtaining module 131 may be configured to obtain the order, in which the order hits at least two of bulk goods, case goods, or material-box-stored goods.

In some embodiments, the obtaining module 131 may obtain an outbound scheduling task of target goods hit by the order.

The controlling module is configured to call a first-type transporter and a second-type transporter simultaneously or sequentially based on the order, and control the first-type transporter and the second-type transporter to transport a first-type carrier storing the first type of goods hit by the order and a material box storing the second type of goods hit by the order to a workstation area for picking and processing. For example, the controlling module may be configured to call at least two of a first transporter, a second transporter or a third transporter simultaneously or sequentially based on the order, and control at least two of the first transporter, the second transporter or the third transporter to transport corresponding two of a first carrier storing the bulk goods hit by the order, a second carrier storing the case goods hit by the order, or a material box storing the material-box-stored goods to a mixed workstation area for picking and processing.

In some embodiments, the controlling module may include a first determining module 132 and a second determining module 133.

The first determining module 132 is configured to determine a target shelf corresponding to the target goods based on the outbound scheduling task of the target goods; in which the target shelf includes a first shelf located in a first area or a second shelf located in a second area; the first shelf and the second shelf have different structures.

The second determining module 132 is configured to determine a target robot for executing the outbound scheduling task based on the target shelf, send an outbound transporting instruction to the target robot to cause the target robot to execute the outbound scheduling task within a target operating area; in which the target operating area is at least one of a first operating area, a second operating area, or a third operating area; the first operating area is an area between each two first shelves, the second operating area is an area at bottom of the first shelf, and the third operating area is the bottom of the second shelf; the target robot is at least one of the first robot, the second robot, or the third robot. The target position includes a first target goods cache position at the lowest layer of the first shelf, and a workstation corresponding to at least one of the second robot or the third robot in the workstations.

Regarding the specific limitations and the beneficial effects of the scheduling device for a warehousing system, reference may be made to the limitations on the scheduling method for a warehousing system described above, which will not be repeated here.

In one embodiment, the second determining module includes a first determining unit, a second determining unit and a third determining unit.

The first determining unit is configured to, in a case where the target shelf is the first shelf, determine the first robot as the target robot, and send the outbound scheduling task to the first robot to cause the first robot to operate in the first operating area after receiving the outbound transporting task, obtain the material box of the target goods on the first shelf, and transport the material box of the target goods to the first target goods cache position on the first shelf, in which the first target goods cache position is located at the lowest layer of the first shelf.

The second determining unit is configured to, when the first robot transports the material box of the target goods to the first target goods cache position on the first shelf, determine the second robot as the target robot, and send the outbound scheduling task to the second robot to cause the second robot to operate in the second operating area after receiving the outbound transporting task and transport the material box of the target goods placed on the first target goods cache position to a first work platform or a mixed picking work platform in the workstation, in which the first work platform is a work platform for picking target goods transported by the second robot, the mixed picking work platform is a work platform for picking the target goods transported by the second robot or target goods transported by the third robot.

The third determining unit is configured to, in a case where the target shelf is the second shelf, determine the third robot as the target robot, and send the outbound scheduling task to the third robot to cause the third robot to operate in the third operating area after receiving the outbound transporting task and transport the second shelf corresponding to the target goods to a second work platform or the mixed picking work platform in the workstation, in which the second work platform is a work platform for picking the target goods transported by the third robot.

In an embodiment, the second shelf includes a first sub-shelf and a second sub-shelf, the first sub-shelf is arranged above the second sub-shelf, the first sub-shelf and the second sub-shelf have different structures, and a grid opening of the first sub-shelf and a grid opening of the first shelf have a same size, a fourth operating area for the first robot to operate is provided between each two second shelves. The scheduling method for a warehousing system further includes a first sending module, a second sending module, and a third sending module.

The first sending module is configured to, in a case where the target shelf is the first sub-shelf, determine the first robot as the target robot, and send the outbound scheduling task to the first robot to cause the first robot to operate in the fourth operating area and the first operating area after receiving the outbound transporting task and transport the material box of the target goods of the first sub-shelf to a second target goods cache position, or to cause the first robot to operate in the fourth operating area and transport the material box of the target goods of the first sub-shelf to a target gird opening of the second sub-shelf.

The second sending module is configured to, when the first robot transports the material box of the target goods to the second target goods cache position, determine the second robot as the target robot, and send the outbound scheduling task to the second robot to cause the second robot to operate in the second operating area and transport the material box of the target goods to the workstation.

The third sending module is configured to, in a case where the target shelf is the second sub-shelf and the material box of the target goods is placed at the target grid opening, determine the third robot as the target robot, and send the outbound scheduling task to the third robot to cause the third robot to operate in the third operating area after receiving the outbound transporting task and transport the second shelf corresponding to the target goods to the workstation.

In an embodiment, the second area further includes a third shelf, the third shelf and the first shelf have a same structure, each third shelf is located on one side of each second shelf, a fifth operating area for the first robot to operate is provided between each two third shelves, a sixth operating area for the second robot to operate is provided at bottom of the third shelf. The scheduling method for a warehousing system further includes a fourth sending module, and a fifth sending module.

The fourth sending module is configured to, in a case where the target shelf is the first sub-shelf, determine the first robot as the target robot, and send the outbound transporting task to the first robot to cause the first robot to operate in the fifth operating area and the fourth operating area and transport the material box of the target goods of the first sub-shelf to a third target goods cache position of the third shelf, in which the third target goods cache position is located at the lowest layer of the third shelf.

The fifth sending module is configured to, when the first robot transports the material box of the target goods to the third target goods cache position, determine the second robot as the target robot, and send the outbound transporting task to the second robot to cause the second robot to transport the material box of the target goods at the third target goods cache position to the workstation.

In some embodiments, the scheduling method for a warehousing system further includes an inbound task obtaining module, a commodity information obtaining module, and a third determining module.

The inbound task obtaining module is configured to obtain, through the electronic device, an inbound scheduling task of the target goods.

The commodity information obtaining module is configured to obtain commodity information of each commodity to be put on shelves based on the inbound scheduling task, in which the commodity information includes a commodity specification and an outbound frequency of the commodity to be put on shelves during a historical time period.

The third determining module is configured to determine a target shelf corresponding to each commodity to be put on shelves based on the commodity information of the commodity to be put on shelves, and control a target robot corresponding to each target shelf to execute the inbound scheduling task to store the commodity to be put on shelves into the corresponding target shelf.

In some embodiments, the third determining module includes a fourth determining unit and a fifth determining unit.

The fourth determining unit is configured to, in a case where the commodity specification of the commodity to be put on shelves is greater than a preset size, determine the second shelf as the target shelf, control the third robot to transport the second shelf to a first shelfing work platform of the workstation, and control the third robot to transport the target shelf back to an original position after storing the commodity to be put on shelves into the target shelf.

The fifth determining unit is configured to, in a case where the commodity specification of the commodity to be put on shelves is less than or equal to the preset size, determine the target shelf corresponding to each commodity to be put on shelves based on the outbound frequency of the commodity to be put on shelves, control the target robot corresponding to each target shelf to execute the inbound scheduling task to store the commodity to be put on shelves into the corresponding target shelf.

In an embodiment, the fifth determining unit is specifically configured to: in a case where the outbound frequency of the commodity to be put on shelves is greater than a preset frequency threshold, determine the second shelf as the target shelf, control the third robot to transport the second shelf corresponding to the commodity to be put on shelves to the first shelfing work platform of the workstation, and control the third robot to transport the target shelf back to the original position when storing the commodity to be put on shelves into the target shelf; in a case where the outbound frequency of the commodity to be put on shelves is not greater than the preset frequency threshold, determine the first shelf as the target shelf, control the second robot to operate in the second operating area and transport a first target material box in the first shelf to a second shelfing work platform of the workstation, and control the second robot to transport the first target material box back to the first shelf when storing the commodity to be put on shelves into the first target material box, or determine the third shelf as the target shelf, control the second robot to operate in the sixth operating area to transport a second target material box corresponding to the commodity to be put on shelves to the second shelfing work platform of the workstation, and control the second robot to transport the second target material box back to the third shelf when storing the commodity to be put on shelves into the second target material box.

In an embodiment, the fifth determining unit is specifically configured to: in the case where the outbound frequency of the commodity to be put on shelves is greater than the preset frequency threshold, obtain a carrying state of each goods position in the second shelf; in a case where the second shelf has a goods position carrying no goods, determine the second shelf as the target shelf, control the third robot to transport the second shelf corresponding to the commodity to be put on shelves to the first shelfing work platform of the workstation, and control the third robot to transport the target shelf back to the original position when storing the commodity to be put on shelves into the target shelf.

In an embodiment, the scheduling method for a warehousing system further includes a state obtaining module, a first tallying module, a second tallying module.

The state obtaining module is configured to obtain a working state of each workstation and a plurality of outbound orders for a next batch.

The first tallying module is configured to: in a case where the working state of each workstation is working, trigger an automatic tallying mode of the warehousing system, and control the first robot to operate in the first operating area or the fourth operating area based on order information of each outbound order in the next batch to transport a material box of each goods to be tallied from a current goods position to a target goods position.

The second tallying module is configured to: in a case where the working state of each workstation is idle, control the first robot to transport a current material box corresponding to the goods to be tallied and a target tallying box to the workstation, and after obtaining a tally completing instruction, control the first robot to operate in the first operating area based on the order information of each outbound order in the next batch to transport the current material box and the target tallying box from a first tallying work platform to the original position.

The second tallying module is configured to: in a case where the working state of each workstation is idle, control the third robot to transport a current shelf corresponding to the goods to be tallied and a target tallying shelf to the workstation, and after obtaining the tally completing instruction, control the third robot to operate in the third operating area based on the order information of each outbound order in the next batch to transport the current shelf and the target tallying shelf from the first tallying work platform to original position.

In an embodiment, the scheduling method for a warehousing system further includes an order obtaining module, a storage area obtaining module, a sixth determining module and a seventh determining module.

The order obtaining module is configured to obtain a plurality of target outbound orders, in which the target outbound order includes at least one target commodity for outbound.

The storage area obtaining module is configured to obtain a warehouse storage area corresponding to each target commodity.

The sixth determining module is configured to: when the obtained warehouse storage area includes a first area and a second area, determine a first order quantity and a second order quantity, in which the first order quantity is an order quantity of target outbound orders that hit the first shelf in the first area; the second order quantity is a second order quantity of target outbound orders that hit the second shelf in the second area.

The seventh determining module is configured to: according to a proportion of the first order quantity to a total quantity of all target outbound orders and a proportion of the second order quantity to the total quantity of all target outbound orders, determine a number of mixed picking work platforms in the workstation; in which the mixed picking work platform is a work platform for picking the target goods transported by the second robot or the target goods transported by the third robot.

Regarding the specific limitations and the beneficial effects of the scheduling device for a warehousing system, reference may be made to the limitations on the scheduling method for a warehousing system described above, which will not be repeated here. Each module in the above-mentioned scheduling device for a warehousing system can be implemented in whole or in part by software, hardware and a combination thereof. Each of the above modules can be embedded in or independent of the processor in the electronic device in the form of hardware, or can be stored in the memory of the electronic device in the form of software, so that the processor can call the above modules to execute the operations corresponding to each of the above modules.

In a specific implementation, the embodiments of the present disclosure also provide an electronic device. The electronic device may be the control server in the foregoing embodiments and is configured to implement all or part of the steps of the foregoing scheduling method for a warehousing system.

As shown in FIG. 27, the electronic device includes: at least one processor 110, a memory 120, and at least one interface 130. In addition, the electronic device may also include a communication bus 140 configured to connect these components.

At least one processor 110 may be a CPU or a processing chip, configured to read and execute computer program instructions stored in the memory 120, so that the at least one processor 110 can execute the method steps in each of the foregoing embodiments.

The memory 120 may be a non-transitory memory, which may include a volatile memory, such as a high-speed random access memory (Random Access Memory, RAM), or may include a non-volatile memory, such as at least one disk storage.

At least one interface 130 includes an input and output interface, and a communication interface. The communication interface may be a wired or wireless interface, thereby realizing communication connections between the electronic device and other devices. The input and output interfaces can be used to connect peripheral devices, such as displays, keyboards, etc.

In some embodiments, the memory 120 stores computer-readable program instructions. When the processor 110 reads and executes the program instructions in the memory 120, the scheduling method for a warehouse system in the foregoing embodiments can be implemented.

In addition, the embodiments of the present disclosure also provide a computer program product for storing computer-readable program instructions. When the instructions are executed by the processor 110, the scheduling method for a warehouse system in the foregoing embodiments can be implemented.

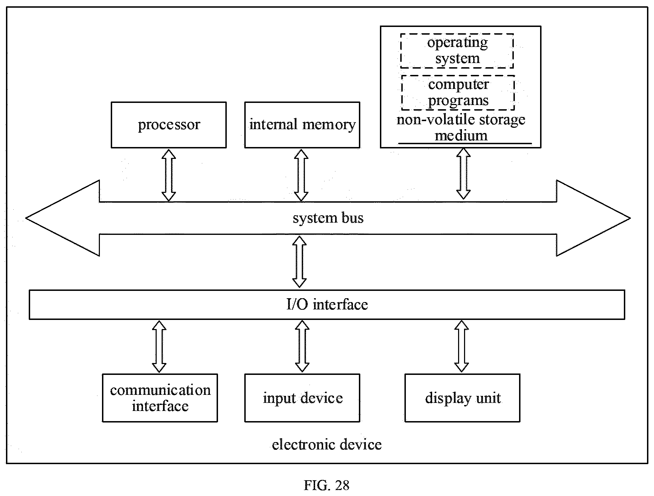

In addition, the embodiments of the present disclosure also provide an electronic device, which may be a terminal, and the terminal may be a robot or a vehicle, or the like. The internal structure diagram of the terminal can be shown in FIG. 28. The electronic device includes a processor, a memory, a communication interface, a display screen and an input device connected through a system bus. The processor of the electronic device is used to provide computing and control capabilities. The memory of the electronic device includes non-volatile storage medium and an internal memory. The non-volatile storage medium stores an operating system and computer programs. The internal memory provides an environment for execution of the operating system and computer programs in the non-volatile storage medium. The communication interface of the electronic device is used for wired or wireless communication with external terminals. The wireless mode can be implemented through WIFI, an operator network, NFC (Near Field Communication) or other technologies. The computer programs implement the scheduling method for a warehouse system when executed by a processor. The display screen of the electronic device may be a liquid crystal display or an electronic ink display. The input device of the electronic device may be a touch layer covered on the display screen, or may be a button, trackball or touch pad provided on a housing of the electronic device, or can also be an external keyboard, trackpad or mouse, etc.

Those skilled in the art can understand that the structures shown in FIGS. 27 and 28 are only block diagrams of partial structures related to the solution of the present disclosure, and do not constitute a limitation on the electronic equipment to which the solution of the present disclosure is applied. Specifically, the electronic device may include more or fewer components than those shown in the figures, or some combinations of components, or have different arrangements of components.

In a specific implementation, the embodiments of the present disclosure also provide an electronic device, including a memory and a processor. Computer programs are stored in the memory. When the processor executes the computer programs, the processor implements the steps of the method in any of the above embodiments.

In a specific implementation, the embodiments of the present disclosure provide a computer-readable storage medium on which computer programs are stored. When the computer programs are executed by a processor, the steps of the method in any of the above embodiments are implemented.

In a specific implementation, the embodiments of the present disclosure provide a computer program product, including computer programs that implement the steps of the method in any of the above embodiments when executed by a processor.

User information (including but not limited to user equipment information, user personal information, etc.) and data (including but not limited to data used for analysis, stored data, displayed data, etc.) involved in the embodiments of the present disclosure may be information and data authorized by the user or fully authorized by all parties. Those of ordinary skill in the art can understand that all or part of the processes in the methods of the above embodiments can be completed by instructing relevant hardware through the computer programs. The computer programs can be stored in the non-volatile computer-readable storage medium. When the computer programs are executed, the processes of the above method embodiments can be implemented. Any reference to memory, database or other media used in the embodiments provided in this application may include at least one of the non-volatile memory or the volatile memory. The non-volatile memory can include read-only memory (ROM), magnetic tape, floppy disk, flash memory, optical memory, high-density embedded non-volatile memory, resistive memory (ReRAM), magnetoresistive random access memory (MRAM), ferroelectric random access memory (FRAM)), phase change memory (PCM), graphene memory, etc. The volatile memory may include random access memory (RAM) or external cache memory. By way of illustration but not limitation, the RAM can be in various forms, such as static random access memory (SRAM) or dynamic random access memory (DRAM). The databases involved in the various embodiments provided in this application may include at least one of a relational database or a non-relational database. The non-relational database may include, but are not limited to, a block chain-based distributed database, etc. The processors involved in the various embodiments provided in this application may include, but are not limited to, general-purpose processors, central processing units, graphics processors, digital signal processors, programmable logic devices, quantum computing-based data processing logic devices, etc.

**Claims**

1. A warehousing system, comprising:

    a workstation area;
    at least one of at least one mixed workstation, at least one first workstation or at least one second workstation, provided in the workstation area and configured to receive an order, wherein the order hits at least first type of goods and second type of goods, the first type of goods is different from the second type of goods;
    a storage area, configured to store at least one first-type carrier and at least one second-type carrier, wherein the first-type carrier is configured to carry the first type of goods, and the second-type carrier is configured to carry the second type of goods;
    at least one first-type transporter, configured to transport the first-type carrier carrying the first type of goods to the mixed workstation or the second workstation based on a transporting instruction;
    at least one second-type transporter, configured to take out a material box from the second-type carrier and transport the material box to the mixed workstation or the first workstation based on the transporting instruction, wherein the material box stores the second type of goods hit by the order; and
    a controller, connected to the first-type transporter and the second-type transporter, and configured to send transporting instructions to the first-type transporter and the second-type transporter respectively.

2. The warehousing system of claim 1, wherein,

    the at least one second-type transporter comprises a first robot, and the first robot is configured to take out the material box from the second-type carrier and transport the material box to the mixed workstation or the first workstation based on the transporting instruction;
    or, the at least one second-type transporter comprises a first robot and a second robot, the first robot is configured to take out the material box from the second-type carrier based on the transporting instruction, and the second robot is configured to receive the material box from the first robot and transport the material box to the mixed workstation or the first workstation based on the transporting instruction;
    or, the at least one second-type transporter comprises a first robot and a second robot, the second-type carrier comprises a storage position and a temporary storage position below the storage position, the first robot is configured to transport the material box at the storage position to the temporary storage position based on the transporting instruction, and the second robot is configured to transport the material box at the temporary storage position to the mixed workstation or the first workstation;

wherein, the material box stores the second type of goods hit by the order.

3. The warehousing system of claim 2, wherein, the second-type carrier comprises a storage position and a temporary storage position below the storage position, the second-type transporter comprises the first robot and the second robot, and the first-type transporter is a third robot;

the first robot, the second robot, and the third robot have different transporting modes; the storage area comprises a first area and a second area, one side of the first area and/or the second area is provided with the workstation area; the first area comprises a plurality of second-type carriers, a first operating area for the first robot to operate is provided between each two second-type carriers, a second operating area for the second robot to operate is provided at bottom of the second-type carrier; the second area comprises at least one first-type carrier, a third operating area for the third robot to walk is provided at bottom of the first-type carrier, the first-type carrier and the second-type carrier have different structures;

the controller is configured to obtain an outbound scheduling task of target goods hit by the order, determine a target carrier corresponding to the target goods based on the outbound scheduling task, generate an outbound transporting task, and send the outbound transporting task to a target robot, so that the target robot performs the outbound scheduling task; wherein the target robot is at least one of the first robot, the second robot, or the third robot; the target carrier is at least one of the first-type carrier or the second-type carrier, and the outbound transporting task comprises position information of the target goods;

the first robot is configured to operate in the first operating area after receiving the outbound transporting task, obtain a material box of the target goods on the second-type carrier, and transport the material box of the target goods to a first target goods cache position on the second-type carrier; the first target goods cache position is located at the temporary storage position of the second-type carrier;

the second robot is configured to operate in the second operating area after receiving the outbound transporting task, and transport the material box of the target goods at the first target goods cache position to the mixed workstation or the first workstation;

the third robot is configured to operate in the third operating area after receiving the outbound transporting task, and transport the first-type carrier corresponding to the target goods to the mixed workstation or the second workstation.

4. The warehousing system of claim 3, wherein the second-type carrier comprises a first shelf, the first-type carrier comprises a second shelf, the second shelf comprises a first sub-shelf and a second sub-shelf, the first sub-shelf is arranged above the second sub-shelf, the first sub-shelf and the second sub-shelf have different structures, and a grid opening of the first sub-shelf is the same as that of the first shelf, a fourth operating area for the first robot to operate is provided between each two second shelves;

the first robot is further configured to operate in the fourth operating area and the first operating area after receiving the outbound transporting task, transport the material box of the target goods of the first sub-shelf to a second target goods cache position, wherein the second target goods cache position is located at the temporary storage position of the first shelf;

the second robot is further configured to operate in the second operating area after receiving the outbound transporting task and transport the material box of the target goods to the mixed workstation or the first workstation;

the first robot is further configured to operate in the fourth operating area and transport the material box of the target goods of the first sub-shelf to a target grid opening of the second sub-shelf;

the third robot is configured to operate in the third operating area after receiving the outbound transporting task and transport the second sub-shelf corresponding to the target goods to the mixed workstation or the second workstation.

5. The warehousing system of claim 4, wherein the second area further comprises a third shelf, the third shelf and the first shelf have a same structure; each third shelf is located on one side of each second shelf, a fifth operating area for the first robot to operate is provided between each two third shelves, a sixth operating area for the second robot to operate is provided at bottom of the third shelf, the first shelf and the third shelf are configured to store the second type of goods;

the first robot is further configured to operate in the fifth operating area and the fourth operating area after receiving the outbound transporting task and transport the material box of the target goods of the first sub-shelf to a third target goods cache position of the third shelf;

the second robot is further configured to transport the material box of the target goods at the third target goods cache position to the mixed workstation or the first workstation after receiving the outbound transporting task.

6. The warehousing system of claim 2, wherein, the temporary storage position of the second-type carrier is configured as a comb structure;

the second robot is configured to drive to be underneath the temporary storage position and lift to pass through comb gaps of the temporary storage position to lift and transport a material box at the temporary storage position from the temporary storage position to the mixed workstation or the first workstation.

7. The warehousing system of claim 6, wherein the second robot comprises a robot body and a carrying part;

the carrying part is arranged on the top of the robot body;

the carrying part comprises:

a bottom part, having a first side and a second side arranged oppositely, and the second side being connected to the robot body;

a support layer, provided on the second side, and configured to carry an item, wherein the item comprises the material box storing the second type of goods, the support layer comprises a plurality of protruding members protruding from the first side along a height direction, the plurality of protruding members are arranged at intervals along a first direction, and a gap between two adjacent protruding members is used for the comb structure of the second-type carrier to insert;

When the item needs to be transferred from the second robot to the temporary storage position of the second-type carrier, the robot body is configured to bring the carrying part to an opening side of the comb structure of the second-type carrier and enable the plurality of protruding members to align with the comb gaps of the comb structure, then bring the carrying part to move toward the second-type carrier, enable the protruding members to interlace with the comb gaps to transport the item to a position above the comb structure, and control the carrying part to descend to place the item on the comb structure and complete docking of the item;

when the item needs to be transferred from the temporary storage position of the second-type carrier to the second robot, the robot body is configured to bring the carrying part to walk underneath the comb structure of the second-type carrier, enable the plurality of protruding members to correspond to the comb gaps, control the carrying part to ascend to enable the plurality of protruding members to interlace with the comb gaps to support the item on the support layer, and bring the carrying part to drive out of the second-type carrier and complete the docking of the item.

8. The warehousing system of claim 7, wherein the carrying part further comprises:

a plurality of first blocking members, provided at both ends of the support layer along the first direction, wherein the first blocking member is configured to block the item carried on the support layer in the first direction; and

a plurality of second blocking members, provided on the plurality of protruding members and located at both ends of the support layer along a second direction, wherein the first direction is different from the second direction, the second blocking member is configured to block the item carried on the support layer in the second direction.

9. The warehousing system of claim 8, wherein the first blocking member is configured as a baffle and is arranged on the bottom part; the second blocking member is configured as a stop lever and is arranged on the protruding member; a first guide surface is provided on an inside of the first blocking member, and the first guide surface is inclined outward along the first direction, a second guide surface is provided on an inside of the second blocking member, and the second guide surface is inclined outward along the second direction, and the first guide surface and the second guide surface are configured to guide the item to the support layer.

10. The warehousing system of claim 2, wherein the first robot of the second-type transporter is configured to take out the material box from the second-type carrier based on the transporting instruction, and the second robot of the second-type transporter is configured to receive the material box from the first robot and transport the material box to the mixed workstation or the first workstation based on the transporting instruction;

wherein, the first robot comprises:

a mast;

a material box pick-and-place mechanism, movably provided on the mast;

wherein, based on the transporting instruction, the material box pick-and-place mechanism takes out the material box storing the second type of goods hit by the order from the second-type carrier;

the second robot comprises:

a third traveling mechanism;

a bearing part, provided on the third traveling mechanism;

wherein the bearing part is configured to receive the material box pushed by the first robot, and the third traveling mechanism is configured to bring the bearing part to travel from the storage area to the mixed workstation or the first workstation.

11. The warehousing system of claim 2, wherein the second-type transporter comprises the first robot, and the first robot is configured to take out the material box from the second-type carrier and transport the material box to the mixed workstation or the first workstation based on the transporting instruction;

the first robot comprises:

a second traveling mechanism;

a mast, provided on the second traveling mechanism;

a material box pick-and-place mechanism, movably provided on the mast;

wherein, based on the transporting instruction, the material box pick-and-place mechanism takes out the material box storing the second type of goods hit by the order from the second-type carrier, and the second traveling mechanism transports the taken out material box from the storage area to the mixed workstation or the first workstation.

12. The warehousing system of claim 11, wherein the material box pick-and-place mechanism comprises:

a base part, provided on the mast in a liftable manner;

a U-shaped telescopic frame, telescopically provided on the base part; and

two clamping claws, telescopically provided on the U-shaped telescopic frame, wherein the two clamping claws are controlled by a grabbing driving mechanism to move closer to or away from each other to grab or release the material box.

13. The warehousing system of any of claims 1-12, wherein a storage density of the second-type carrier is greater than that of the first-type carrier;

a goods specification of the second type of goods is less than or equal to that of the first type of goods, and/or an outbound quantity of the first type of goods is greater than that of the second type of goods;

the first type of goods comprises at least one of bulk goods or case goods, and the second type of goods comprises material-box-stored goods.

14. The warehousing system of any of claims 1-12, wherein the first workstation comprises a first work platform, and the first work platform is a work platform for picking target goods transported by the second-type transporter;

the second workstation comprises a second work platform, and the second work platform is a work platform for picking target goods transported by the first-type transporter;

the mixed workstation comprises a mixed picking work platform, and the mixed picking work platform is a work platform for picking the target goods transported by the second-type transporter or the target goods transported by the first-type transporter.

15. A scheduling method for a warehousing system, comprising:

obtaining an order, wherein the order hits at least first type of goods and second type of goods, the first type of goods is different from the second type of goods;

calling a first-type transporter and a second-type transporter simultaneously or sequentially based on the order, and controlling the first-type transporter and the second-type transporter to transport a first-type carrier storing the first type of goods hit by the order and a material box storing the second type of goods hit by the order to a workstation area for picking and processing;

wherein the workstation area comprises at least one of at least one mixed workstation, at least one first workstation or at least one second workstation, the first-type transporter is configured to transport the first-type carrier carrying the first type of goods to the mixed workstation or the second workstation, and the second-type transporter is configured to transport the material box storing the second type of goods hit by the order to the mixed workstation or the first workstation.

16. The method of claim 15, wherein calling the first-type transporter and the second-type transporter simultaneously or sequentially based on the order, and controlling the first-type transporter and the second-type transporter to transport the first-type carrier storing the first type of goods hit by the order and the material box storing the second type of goods hit by the order to the workstation area, comprise:

determining a position of the first-type carrier and a position of the second-type carrier corresponding to the first type of goods and the second type of goods hit by the order;

determining paths along which the first-type transporter and the second-type transporter move from current positions to the first-type carrier and the material box, and to the corresponding workstations after picking the first-type carrier and the material box; and

calling the first-type transporter and the second-type transporter that are closest to the first-type carrier and the material box and that are idle based on the order to transport the first-type carrier and the material box to the corresponding workstations.

17. The method of claim 16, wherein determining the position of the first-type carrier and the position of the second-type carrier corresponding to the first type of goods and the second type of goods hit by the order comprises:

determining a target shelf corresponding to target goods based on an outbound scheduling task of the target goods hit by the order, wherein the target shelf comprises a first shelf located in a first area and a second shelf located in a second area, and the first shelf and the second shelf have different structures; and

determining a target robot for executing the outbound scheduling task based on the target shelf, sending an outbound transporting task to the target robot to cause the target robot to execute the outbound scheduling task within a target operating area, wherein the target operating area is at least one of a first operating area, a second operating area or a third operating area, the first operating area is an area between each two first shelves, the second operating area is an area at bottom of the first shelf, the third operating area is an area at bottom of the second shelf; the target robot is at least one of a first robot, a second robot or a third robot, the second-type transporter comprises the first robot and the second robot, the first-type transporter is the third robot; the second-type carrier is the first shelf, the second-type carrier is the second shelf.

18. The method of claim 17, wherein determining the target robot for executing the outbound scheduling task based on the target shelf, sending an outbound transporting task to the target robot to cause the target robot to execute the outbound scheduling task, comprise:

in a case where the target shelf is the first shelf, determining the first robot as the target robot, and sending the outbound transporting task to the first robot to cause the first robot to operate in the first operating area after receiving the outbound transporting task, obtain the material box of the target goods on the first shelf, and transport the material box of the target goods to a first target goods cache position on the first shelf, wherein the first target goods cache position is located at a temporary storage position of the first shelf;

when the first robot transports the material box of the target goods to the first target goods cache position on the first shelf, determining the second robot as the target robot, and sending the outbound transporting task to the second robot to cause the second robot to operate in the second operating area after receiving the outbound transporting task and transport the material box of the target goods placed on the first target goods cache position to the mixed workstation or the first workstation in the workstation area, wherein the first workstation is a workstation for picking target goods transported by the second robot, the mixed workstation is a workstation for picking the target goods transported by the second robot or target goods transported by the third robot;

in a case where the target shelf is the second shelf, determining the third robot as the target robot, and sending the outbound transporting task to the third robot to cause the third robot to operate in the third operating area after receiving the outbound transporting task and transport the second shelf corresponding to the target goods to the mixed workstation or the second workstation in the workstation area, wherein the second workstation is a workstation for picking the target goods transported by the third robot.

19. The method of claim 18, wherein the second shelf comprises a first sub-shelf and a second sub-shelf, the first sub-shelf is arranged above the second sub-shelf, the first sub-shelf and the second sub-shelf have different structures, and a grid opening of the first sub-shelf and a grid opening of the first shelf have a same size, a fourth operating area for the first robot to operate is provided between each two second shelves; and the method further comprises:

in a case where the target shelf is the first sub-shelf, determining the first robot as the target robot, and sending the outbound transporting task to the first robot to cause the first robot to operate in the fourth operating area and the first operating area after receiving the outbound transporting task and transport the material box of the target goods of the first sub-shelf to a second target goods cache position, or to cause the first robot to operate in the fourth operating area and transport the material box of the target goods of the first sub-shelf to a target gird opening of the second sub-shelf;

when the first robot transports the material box of the target goods to the second target goods cache position, determining the second robot as the target robot, and sending the outbound transporting task to the second robot to cause the second robot to operate in the second operating area and transport the material box of the target goods to the first workstation or the mixed workstation;

in a case where the target shelf is the second sub-shelf and the material box of the target goods is placed at the target grid opening, determining the third robot as the target robot, and sending the outbound transporting task to the third robot to cause the third robot to operate in the third operating area after receiving the outbound transporting task and transport the second shelf corresponding to the target goods to the second workstation or the mixed workstation.

20. The method of claim 19, wherein the second area comprises a third shelf, the third shelf and the first shelf have a same structure, each third shelf is located on one side of each second shelf, a fifth operating area for the first robot to operate is provided between each two third shelves, a sixth operating area for the second robot to operate is provided at bottom of the third shelf, and the method further comprises:

in a case where the target shelf is the first sub-shelf, determining the first robot as the target robot, and sending the outbound transporting task to the first robot to cause the first robot to operate in the fifth operating area and the fourth operating area and transport the material box of the target goods of the first sub-shelf to a third target goods cache position of the third shelf, wherein the third target goods cache position is located at the lowest layer of the third shelf;

when the first robot transports the material box of the target goods to the third target goods cache position, determining the second robot as the target robot, and sending the outbound transporting task to the second robot to cause the second robot to transport the material box of the target goods at the third target goods cache position to the first workstation or the mixed workstation.

21. A warehousing system, comprising a storage area, a transporter, a workstation and a controller; wherein,

the transporter comprises a first robot, a second robot and a third robot, the first robot, the second robot and the third robot have different transporting modes; the storage area comprises a first area and a second area, the workstation is provided on one side of the first area and/or the second area; the workstation comprises a work platform corresponding to at least one of the second robot and the third robot; the first area comprises a plurality of first shelves, a first operating area for the first robot to operate is provided between each two first shelves, and a second operating area for the second robot to operate is provided at bottom of the first shelf; the second area comprises a plurality of second shelves, a third operating area for the third robot to operate is provided at bottom of the second shelf; the first shelf and the second shelf have different structures, the first shelf and the second shelf respectively store different types of goods;

the controller is configured to obtain an outbound scheduling task of target goods, determine a target shelf corresponding to the target goods based on the outbound scheduling task, generate an outbound transporting task, and send the outbound transporting task to a target robot to cause the target robot to execute the outbound scheduling task; wherein the target robot is at least one of the first robot, the second robot, or the third robot; the target shelf is at least one of the first shelf or the second shelf; the outbound transporting task comprises position information of the target goods;

the first robot is configured to operate in the first operating area after receiving the outbound transporting task, obtain a material box of the target goods on the first shelf, and transport the material box of the target goods to a first target goods cache position on the first shelf; wherein the first target goods cache position is located at the lowest layer of the first shelf;

the second robot is configured to operate in the second operating area after receiving the outbound transporting task, and transport the material box of the target goods placed on the first target goods cache position to the workstation;

the third robot is configured to operate in the third operating area after receiving the outbound transporting task, and transport the second shelf corresponding to the target goods to the workstation;

the workstation is configured to pick the target goods in the material box or the target goods in the second shelf transported by the target robot.

22. The warehousing system of claim 21, wherein, the workstation comprises a mixed picking work platform, a first work platform and a second work platform; the first work platform is a work platform for picking target goods transported by the second robot; the mixed picking work platform is a work platform for picking the target goods transported by the second robot or target goods transported by the third robot; the second work platform is a work platform for picking the target goods in the second shelf transported by the third robot;

the second robot is configured to operate in the second operating area after receiving the outbound transporting task, and transport the material box of the target goods to the mixed picking work platform or the first work platform;

the third robot is configured to operate in the third operating area after receiving the outbound transporting task, and transport the second shelf corresponding to the target goods to the mixed picking work platform or the second work platform.

23. The warehousing system of claim 22, wherein, each work platform in the work station is configured as a mixed picking work platform;

the second robot is configured to operate in the second operating area after receiving the outbound transporting task, and transport the material box of the target goods to the mixed picking work platform;

the third robot is configured to operate in the third operating area after receiving the outbound transporting task, and transport the second shelf corresponding to the target goods to the mixed picking work platform.

24. The warehousing system of any of claims 21-23, wherein,

the second shelf comprises a first sub-shelf and a second sub-shelf, the first sub-shelf is arranged above the second sub-shelf, the first sub-shelf and the second sub-shelf have different structures, and a grid opening of the first sub-shelf is the same as a grid opening of the first shelf, a fourth operating area for the first robot to operate is provided between each two second shelves;

the first robot is further configured to operate in the fourth operating area and the first operating area after receiving the outbound transporting task, and transport the material box of the target goods of the first sub-shelf to a second target goods cache position, wherein the second target goods cache position is located at the lowest layer of the first shelf in the first area;

the second robot is further configured to operate in the second operating area after receiving the outbound transporting task, and transport the material box of the target goods to the first work platform or the mixed picking work platform;

the first robot is further configured to operate in the fourth operating area and transport the material box of the target goods of the first sub-shelf to a target gird opening of the second sub-shelf;

the third transport is configured to operate in the third operating area after receiving the outbound transporting task and transport the second sub-shelf corresponding to the target goods to the second work platform or the mixed picking work platform.

25. The warehousing system of claim 24, wherein, the second area comprises a third shelf, the third shelf and the first shelf have a same structure, each third shelf is located on one side of each second shelf, a fifth operating area for the first robot to operate is provided between each two third shelves, a sixth operating area for the second robot to operate is provided at bottom of the third shelf; the first shelf and the third shelf store same type of goods;

the first robot is further configured to operate in the fifth operating area and the fourth operating area after receiving the outbound transporting task, and transport the material box of the target goods of the first sub-shelf to a third target goods cache position of the third shelf;

the second robot is further configured to transport the material box of the target goods at the third target goods cache position to the workstation after receiving the outbound transporting task.

26. The warehousing system of any of claims 21-23, wherein,

a storage density of the first shelf is greater than that of the second shelf;
the first shelf is configured to store the second type of goods, the second shelf is configured to store the first type of goods; a goods specification of the second type of goods is less than or equal to that of the first type of goods, and/or an outbound quantity of the first type of goods is greater than that of the second type of goods.

27. A scheduling method for a warehousing system, comprising:

obtaining, by a controller, an outbound scheduling task of target goods;
determining a target shelf corresponding to the target goods based on the outbound scheduling task of the target goods; wherein the target shelf comprises a first shelf located in a first area or a second shelf located in a second area; the first shelf and the second shelf have different structures;
determining a target robot for executing the outbound scheduling task based on the target shelf, sending an outbound transporting instruction to the target robot to cause the target robot to execute the outbound scheduling task within a target operating area; wherein the target operating area is at least one of a first operating area, a second operating area, or a third operating area; the first operating area is an area between each two first shelves, the second operating area is an area at bottom of the first shelf, and the third operating area is an area at bottom of the second shelf; the target robot is at least one of the first robot, the second robot, or the third robot.

28. The method of claim 27, wherein determining the target robot for executing the outbound scheduling task based on the target shelf, sending the outbound transporting instruction to the target robot to cause the target robot to execute the outbound scheduling task, comprise:

in a case where the target shelf is the first shelf, determining the first robot as the target robot, and sending the outbound scheduling task to the first robot to cause the first robot to operate in the first operating area after receiving the outbound transporting task, obtain the material box of the target goods on the first shelf, and transport the material box of the target goods to a first target goods cache position on the first shelf, wherein the first target goods cache position is located at the lowest layer of the first shelf;
when the first robot transports the material box of the target goods to the first target goods cache position on the first shelf, determining the second robot as the target robot, and sending the outbound scheduling task to the second robot to cause the second robot to operate in the second operating area after receiving the outbound transporting task and transport the material box of the target goods placed on the first target goods cache position to a first work platform or a mixed picking work platform in a workstation, wherein the first work platform is a work platform for picking target goods transported by the second robot, the mixed picking work platform is a work platform for picking the target goods transported by the second robot or target goods transported by the third robot;
in a case where the target shelf is the second shelf, determining the third robot as the target robot, and sending the outbound scheduling task to the third robot to cause the third robot to operate in the third operating area after receiving the outbound transporting task and transport the second shelf corresponding to the target goods to a second work platform or the mixed picking work platform in the workstation, wherein the second work platform is a work platform for picking the target goods transported by the third robot.

29. The method of claim 28, wherein the second shelf comprises a first sub-shelf and a second sub-shelf, the first sub-shelf is arranged above the second sub-shelf, the first sub-shelf and the second sub-shelf have different structures, and a grid opening of the first sub-shelf and a grid opening of the first shelf have a same size, a fourth operating area for the first robot to operate is provided between each two second shelves; and the method further comprises:

in a case where the target shelf is the first sub-shelf, determining the first robot as the target robot, and sending the outbound scheduling task to the first robot to cause the first robot to operate in the fourth operating area and the first operating area after receiving the outbound transporting task and transport the material box of the target goods of the first sub-shelf to a second target goods cache position, or to cause the first robot to operate in the fourth operating area and transport the material box of the target goods of the first sub-shelf to a target gird opening of the second sub-shelf;
when the first robot transports the material box of the target goods to the second target goods cache position, determining the second robot as the target robot, and sending the outbound scheduling task to the second robot to cause the second robot to operate in the second operating area and transport the material box of the target goods to the workstation;

in a case where the target shelf is the second sub-shelf and the material box of the target goods is placed at the target grid opening, determining the third robot as the target robot, and sending the outbound scheduling task to the third robot to cause the third robot to operate in the third operating area after receiving the outbound transporting task and transport the second shelf corresponding to the target goods to the workstation.

30. The method of claim 29, wherein the second area comprises a third shelf, the third shelf and the first shelf have a same structure, each third shelf is located on one side of each second shelf, a fifth operating area for the first robot to operate is provided between each two third shelves, a sixth operating area for the second robot to operate is provided at bottom of the third shelf, and the method further comprises:

in a case where the target shelf is the first sub-shelf, determining the first robot as the target robot, and sending the outbound transporting task to the first robot to cause the first robot to operate in the fifth operating area and the fourth operating area and transport the material box of the target goods of the first sub-shelf to a third target goods cache position of the third shelf, wherein the third target goods cache position is located at the lowest layer of the third shelf;
when the first robot transports the material box of the target goods to the third target goods cache position, determining the second robot as the target robot, and sending the outbound transporting task to the second robot to cause the second robot to transport the material box of the target goods at the third target goods cache position to the workstation.

31. The method of any of claims 27-30, further comprising:

obtaining, by the controller, an inbound scheduling task of the target goods;
obtaining commodity information of each commodity to be put on shelves based on the inbound scheduling task, wherein the commodity information comprises a commodity specification and an outbound frequency of the commodity to be put on shelves during a historical time period;
determining a target shelf corresponding to each commodity to be put on shelves based on the commodity information of the commodity to be put on shelves, and controlling a target robot corresponding to each target shelf to execute the inbound scheduling task to store the commodity to be put on shelves into the corresponding target shelf.

32. The method of claim 31, wherein determining the target shelf corresponding to each commodity to be put on shelves based on the commodity information of the commodity to be put on shelves, and controlling the target robot corresponding to each target shelf to execute the inbound scheduling task to store the commodity to be put on shelves into the corresponding target shelf, comprise:

in a case where the commodity specification of the commodity to be put on shelves is greater than a preset size, determining the second shelf as the target shelf, controlling the third robot to transport the second shelf to a first shelfing work platform, and controlling the third robot to transport the target shelf back to an original position after storing the commodity to be put on shelves into the target shelf;
in a case where the commodity specification of the commodity to be put on shelves is less than or equal to the preset size, determining the target shelf corresponding to each commodity to be put on shelves based on the outbound frequency of the commodity to be put on shelves, controlling the target robot corresponding to each target shelf to execute the inbound scheduling task to store the commodity to be put on shelves into the corresponding target shelf.

33. The method of claim 32, wherein determining the target shelf corresponding to each commodity to be put on shelves based on the outbound frequency of the commodity to be put on shelves, and controlling the target robot corresponding to each target shelf to execute the inbound scheduling task to store the commodity to be put on shelves into the corresponding target shelf, comprise:

in a case where the outbound frequency of the commodity to be put on shelves is greater than a preset frequency threshold, determining the second shelf as the target shelf, controlling the third robot to transport the second shelf corresponding to the commodity to be put on shelves to the first shelfing work platform of the workstation, and controlling the third robot to transport the target shelf back to the original position when storing the commodity to be put on shelves into the target shelf;
in a case where the outbound frequency of the commodity to be put on shelves is not greater than the preset frequency threshold, determining the first shelf as the target shelf, controlling the second robot to operate in the second operating area and transport a first target material box in the first shelf to a second shelfing work platform of the workstation, and controlling the second robot to transport the first target material box back to the first shelf when storing the commodity to be put on shelves into the first target material box;

or determining the third shelf as the target shelf, controlling the second robot to operate in the sixth operating area to transport a second target material box corresponding to the commodity to be put on shelves to the second shelfing work platform of the workstation, and controlling the second robot to transport the second target material box back to the third shelf when storing the commodity to be put on shelves into the second target material box.

34. The method of claim 33, wherein in the case where the outbound frequency of the commodity to be put on shelves is greater than the preset frequency threshold, determining the second shelf as the target shelf, controlling the third robot to transport the second shelf corresponding to the commodity to be put on shelves to the first shelfing work platform of the workstation, and controlling the third robot to transport the target shelf back to the original position when storing the commodity to be put on shelves into the target shelf, comprise:

in the case where the outbound frequency of the commodity to be put on shelves is greater than the preset frequency threshold, obtaining a carrying state of each goods position in the second shelf;

in a case where the second shelf has a goods position carrying no goods, determining the second shelf as the target shelf, controlling the third robot to transport the second shelf corresponding to the commodity to be put on shelves to the first shelfing work platform of the workstation, and controlling the third robot to transport the target shelf back to the original position when storing the commodity to be put on shelves into the target shelf.

35. The method of any of claims 27-30, further comprising:

obtaining a working state of each workstation and a plurality of outbound orders for a next batch;

in a case where the working state of each workstation is working, triggering an automatic tallying mode of the warehousing system, and controlling the first robot to operate in the first operating area or the fourth operating area based on order information of each outbound order in the next batch to transport a material box of each goods to be tallied from a current goods position to a target goods position;

in a case where the working state of each workstation is idle, controlling the first robot to transport a current material box corresponding to the goods to be tallied and a target tallying box to the workstation, and after obtaining a tally completing instruction, controlling the first robot to operate in the first operating area based on the order information of each outbound order in the next batch to transport the current material box and the target tallying box from a first tallying work platform to the original position;

in a case where the working state of each workstation is idle, controlling the third robot to transport a current shelf corresponding to the goods to be tallied and a target tallying shelf to the workstation, and after obtaining the tally completing instruction, controlling the third robot to operate in the third operating area based on the order information of each outbound order in the next batch to transport the current shelf and the target tallying shelf from the first tallying work platform to original position.

36. The method of any of claims 27-30, further comprising:

obtaining a plurality of target outbound orders, wherein the target outbound order comprises at least one target commodity for outbound;

obtaining a warehouse storage area corresponding to each target commodity;

when the obtained warehouse storage area comprises the first area and the second area, determining a first order quantity and a second order quantity, wherein the first order quantity is an order quantity of target outbound orders that hit the first shelf in the first area; the second order quantity is a second order quantity of target outbound orders that hit the second shelf in the second area;

according to a proportion of the first order quantity to a total quantity of all target outbound orders and a proportion of the second order quantity to the total quantity of all target outbound orders, determining a number of mixed picking work platforms in the workstation; wherein the mixed picking work platform is a work platform for picking the target goods transported by the second robot or the target goods transported by the third robot.

37. A scheduling device for a warehousing system, comprising:

an obtaining module, configured to obtain an order, wherein the order hits first type of goods and second type of goods;

a controlling module, configured to call a first-type transporter and a second-type transporter simultaneously or sequentially based on the order, and control the first-type transporter and the second-type transporter to transport a first-type carrier storing the first type of goods hit by the order and a material box storing the second type of goods hit by the order to a workstation area for picking and processing.

38. An electronic device, comprising a memory and a processor, wherein the memory stores a computer program, and when the processor executes the computer program, steps of the method of any one of claims 15 to 20, 27 to 36 are implemented.

39. A computer-readable storage medium having a computer program stored thereon, wherein when the computer program is executed by a processor, steps of the method of any one of claims 15 to 20, 27 to 36 are implemented.

FIG. 1

FIG. 2

FIG. 3

FIG. 4

FIG. 5

FIG. 6

second
shelf

third robot

third operating
area

FIG. 7

first area (each is first
shelf)

second area (each
second shelf is
transportable shelf)

workstation

FIG. 8

FIG. 9

FIG. 10

FIG. 11

7100

FIG. 12

7100

FIG. 13

FIG. 14

first sub-shelf

second sub-shelf

FIG. 15

second
shelf

first sub-shelf   third shelf

first robot

second
sub-shelf

fifth
operating
area

sixth operating
area

third robot

third operating area

second robot

fourth operating area

FIG. 16

first area (first shelf)

second area (combination of
second shelf and third shelf)

workstation

FIG. 17

first area（first shelf）

second area（second shelf and third shelf）

workstation

FIG. 18

mixed workstation

| reviewing and packaging computer | work platform | picking computer |

storage device

FIG. 19

obtaining an order, in which the order hits at least a first type of goods and a second type of goods, and the first type of goods is different from the second type of goods ⌇ 100

calling a first-type transporter and a second-type transporter simultaneously or sequentially based on the order, and controlling the first-type transporter and the second-type transporter to transport a first-type carrier storing the first type of goods hit by the order, a material box storing the second type of goods hit by the order to a workstation area for picking and processing ⌇ 200

FIG. 20

start

sending an order, in which the order hits at least two types of commodities of bulk commodities, case commodities, or material-box-stored commodities ⌇ S1

based on the order, the first transporter, calling the carrier transporter, and the material box transporter simultaneously or sequentially, to transport the first carrier storing the bulk commodities hit by the order, the second carrier storing the case commodities hit by the order and the material box storing the material-box-stored commodities hit by the order to the mixed workstation for picking and processing ⌇ S2

reviewing the order and attaching a label at the mixed workstation ⌇ S3

end

FIG. 21

based on the order, determining a position of the first carrier, a position of the second carrier and a position of the material box of the bulk commodities, the case commodities, the material-box-stored commodities hit by the order ⌇ S20

determining paths along which the carrier transporter, and the material box transporter move from current positions to the first carrier, the second carrier and the material box, and to the mixed workstation after picking the first carrier, the second carrier and the material box ⌇ S21

based on the order, calling the carrier transporter, and the material box transporter that are currently idle and that are closest the first carrier, the second carrier and the material box to transport the first carrier, the second carrier and the material box to the mixed workstation ⌇ S22

FIG. 22

an electronic device obtains an outbound scheduling task of target goods — 202

based on the outbound scheduling task of the target goods, determining a target shelf corresponding to the target goods, in which the target shelf includes a first shelf located in a first area and a second shelf located in a second area, and the first shelf and the second shelf have different structures — 204

based on the target shelf, determining a target robot for executing the outbound scheduling task, sending an outbound transporting instruction to the target robot to cause the target robot to execute the outbound scheduling task — 206

FIG. 23

an electronic device obtains an inbound scheduling task of the target goods — 302

based on the inbound scheduling task, obtaining commodity information of each commodity to be put on shelves, in which the commodity information includes a commodity specification and an outbound frequency of the commodity to be put on shelves during a historical time period — 304

determining a target shelf corresponding to each commodity to be put on shelves based on the commodity information of the commodity to be put on shelves, and controlling a target robot corresponding to each target shelf to execute the inbound scheduling task to store the commodity to be put on shelves into the corresponding target shelf — 306

FIG. 24

obtaining a working state of each workstation and a plurality of outbound orders for a next batch — 402

in a case where the working state of each workstation is working, triggering an automatic tallying mode of the warehousing system, and controlling the first robot to operate in the first operating area or the fourth operating area based on order information of each outbound order in the next batch to transport a material box of each goods to be tallied from a current goods position to a target goods position — 404

in a case where the working state of each workstation is idle, controlling the first robot to transport a current material box corresponding to the goods to be tallied and a target tallying box to the workstation, and after obtaining a tally completing instruction, controlling the first robot to operate in the first operating area based on the order information of each outbound order in the next batch to transport the current material box and the target tallying box from a first tallying work platform to the original position — 406

in a case where the working state of each workstation is idle, controlling the third robot to transport a current shelf corresponding to the goods to be tallied and a target tallying shelf to the workstation, and after obtaining the tally completing instruction, controlling the third robot to operate in the third operating area based on the order information of each outbound order in the next batch to transport the current shelf and the target tallying shelf from the first tallying work platform to original position — 408

FIG. 25

| obtaining module 131 | first determining module 132 | second determining module 133 |

scheduling device for a warehousing system

FIG. 26

electronic device

processor — 110    memory — 120

— 140

— 130

interface

FIG. 27

FIG. 28

## INTERNATIONAL SEARCH REPORT

| International application No. |
| --- |
| **PCT/CN2023/111716** |

**A.    CLASSIFICATION OF SUBJECT MATTER**

B65G1/04(2006.01)i;  B65G1/137(2006.01)i;  G06Q10/08(2023.01)i

According to International Patent Classification (IPC) or to both national classification and IPC

**B.    FIELDS SEARCHED**

Minimum documentation searched (classification system followed by classification symbols)

IPC:B65G G06Q

Documentation searched other than minimum documentation to the extent that such documents are included in the fields searched

Electronic data base consulted during the international search (name of data base and, where practicable, search terms used)

CNTXT, ENTXTC, ENTXT, CNKI: 北京极智嘉科技股份有限公司, 货架, 货箱, 料箱, 容器, 搬运, 机器人, 分拣, 缓存, 暂存, 仓储, shelf, box, container, warehouse, stor+, robot, buffer

**C.    DOCUMENTS CONSIDERED TO BE RELEVANT**

| Category* | Citation of document, with indication, where appropriate, of the relevant passages | Relevant to claim No. |
| --- | --- | --- |
| PX | CN 218950120 U (BEIJING GEEKPLUS TECHNOLOGY CO., LTD.) 02 May 2023 (2023-05-02) description, specific embodiments, and figures 1-12 | 1-14 |
| PX | CN 116002257 A (BEIJING GEEKPLUS TECHNOLOGY CO., LTD.) 25 April 2023 (2023-04-25) description, specific embodiments, and figures 1-15 | 15-39 |
| X | CN 112330249 A (BEIJING GEEKPLUS TECHNOLOGY CO., LTD.) 05 February 2021 (2021-02-05) description, specific embodiments, and figures 1-7 | 1-2, 13-16, 37-39 |
| Y | CN 112330249 A (BEIJING GEEKPLUS TECHNOLOGY CO., LTD.) 05 February 2021 (2021-02-05) description, specific embodiments, and figures 1-7 | 2-12, 17-36 |
| Y | CN 111361908 A (SHANGHAI QUICKTRON INTELLIGENT TECHNOLOGY CO., LTD.) 03 July 2020 (2020-07-03) description, specific embodiments, and figures 1-9 | 2-9, 17-36 |

☑ Further documents are listed in the continuation of Box C.      ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **19 October 2023** | **25 October 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/111716** |

**C.    DOCUMENTS CONSIDERED TO BE RELEVANT**

| Category* | Citation of document, with indication, where appropriate, of the relevant passages | Relevant to claim No. |
| --- | --- | --- |
| Y | CN 112224733 A (BEIJING GEEKPLUS TECHNOLOGY CO., LTD.) 15 January 2021 (2021-01-15)<br>description, specific embodiments, and figures 1-4 | 2, 10 |
| Y | CN 114803258 A (HAI ROBOTICS CO., LTD.) 29 July 2022 (2022-07-29)<br>description, specific embodiments, and figures 1-13 | 11-12 |
| A | CN 110949923 A (BEIJING GEEKPLUS TECHNOLOGY CO., LTD.) 03 April 2020 (2020-04-03)<br>entire document | 1-39 |
| A | CN 112693800 A (SHANGHAI QUICKTRON INTELLIGENT TECHNOLOGY CO., LTD.) 23 April 2021 (2021-04-23)<br>entire document | 1-39 |
| A | CN 216188201 U (BEIJING GEEKPLUS TECHNOLOGY CO., LTD.) 05 April 2022 (2022-04-05)<br>entire document | 1-39 |
| A | US 2021090001 A1 (CAJA ELASTIC DYNAMIC SOLUTIONS LTD.) 25 March 2021 (2021-03-25)<br>entire document | 1-39 |

Form PCT/ISA/210 (second sheet) (July 2022)

**INTERNATIONAL SEARCH REPORT**
Information on patent family members

International application No.

**PCT/CN2023/111716**

| Patent document cited in search report | | | Publication date (day/month/year) | Patent family member(s) | | | Publication date (day/month/year) |
|---|---|---|---|---|---|---|---|
| CN | 218950120 | U | 02 May 2023 | None | | | |
| CN | 116002257 | A | 25 April 2023 | None | | | |
| CN | 112330249 | A | 05 February 2021 | WO | 2022095593 | A1 | 12 May 2022 |
| | | | | KR | 20230095117 | A | 28 June 2023 |
| CN | 111361908 | A | 03 July 2020 | CN | 111361908 | B | 15 October 2021 |
| CN | 112224733 | A | 15 January 2021 | CN | 112224733 | B | 12 August 2022 |
| CN | 114803258 | A | 29 July 2022 | CN | 114803258 | B | 05 September 2023 |
| CN | 110949923 | A | 03 April 2020 | CN | 110949923 | B | 12 August 2022 |
| CN | 112693800 | A | 23 April 2021 | CN | 112693800 | B | 15 November 2022 |
| CN | 216188201 | U | 05 April 2022 | CN | 115973658 | A | 18 April 2023 |
| | | | | WO | 2023071399 | A1 | 04 May 2023 |
| US | 2021090001 | A1 | 25 March 2021 | IL | 275416 | A | 30 July 2020 |
| | | | | EP | 3728079 | A1 | 28 October 2020 |
| | | | | EP | 3728079 | A4 | 19 January 2022 |
| | | | | US | 11574276 | B2 | 07 February 2023 |
| | | | | US | 2023133893 | A1 | 04 May 2023 |
| | | | | WO | 2019123254 | A1 | 27 June 2019 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202222101841

- CN 202310121443